# EUROPÄISCHE PATENTSCHRIFT

(11) **EP 0 998 691 B1**
(45) Veröffentlichungstag und Bekanntmachung des Hinweises auf die Patenterteilung: **29.10.2003**
(21) Anmeldenummer: 98947300.4
(22) Anmeldetag: 15.07.1998
(51) Int. Cl.: G02F 1/01

(54) **ANORDNUNG ZUR ELEKTRISCHEN STEUERUNG DER INTENSITÄT VON UNPOLARISIERTEM LICHT**
ARRANGEMENT FOR ELECTRICALLY CONTROLLING THE INTENSITY OF UNPOLARISED LIGHT
DISPOSITIF POUR COMMANDER ELECTRIQUEMENT L'INTENSITE D'UNE LUMIERE NON POLARISEE

(30) Priorität: 19.07.1997 DE 19731134; 19.07.1997 DE 19731135
(43) Veröffentlichungstag der Anmeldung: 10.05.2000
(73) Patentinhaber: Deutsche Telekom AG, 64307 Darmstadt (DE)
(72) Erfinder: DULTZ, Wolfgang, D-65936 Frankfurt (DE); BERESNEV, Leonid, Columbia, MD 21044 (US); PATRUSHEVA, Galina, Columbia, MD 21044 (US); HAASE, Wolfgang, D-64354 Reinheim (DE)
(74) Vertreter: Gornott, Dietmar, Dipl.-Ing.
(86) Internationale Anmeldenummer: DE9802017
(87) Internationale Veröffentlichungsnummer: WO99004310

(56) Entgegenhaltungen:
- US-A- 4 948 229
- US-A- 5 321 774
- PATENT ABSTRACTS OF JAPAN vol. 011, no. 112 (P-565), 9. April 1987 -& JP 61 261725 A (MITSUBISHI ELECTRIC CORP), 19. November 1986
- PATENT ABSTRACTS OF JAPAN vol. 010, no. 354 (P-521), 28. November 1986 -& JP 61 151612 A (MITSUBISHI ELECTRIC CORP), 10. Juli 1986
- PATENT ABSTRACTS OF JAPAN vol. 097, no. 010, 31. Oktober 1997 -& JP 09 146041 A (SANYO ELECTRIC CO LTD), 6. Juni 1997 -& DATABASE WPI Week 9733 Derwent Publications Ltd., London, GB; AN 97-354511 XP002089210

## Beschreibung

Die Erfindung betrifft eine Anordnung zur elektrischen Steuerung der Intensität von unpolarisiertem Licht mit einem Strahlenteiler zur Aufteilung zugeführten Lichts in zwei orthogonal zueinander polarisierte Lichtbündel, einer nachgeschalteten ersten reflektierenden Einrichtung zur Reflexion mindestens eines der polarisierten Lichtbündel, die derart ausgebildet ist, daß die polarisierten Lichtbündel parallel verlaufen und durch eine elektro-optische Einrichtung hindurchtreten, sowie mindestens einer nachgeschalteten zweiten reflektierenden Einrichtung, welche zur Reflexion der Lichtbündel in Gegenrichtung derart angeordnet ist, daß die Lichtbündel ein zweites Mal durch die elektro-optische Einrichtung hindurchtreten und anschließend durch die erste reflektierende Einrichtung und den Strahlenteiler wieder vereinigt und zu mindestens einer Austrittsstelle geführt werden, wo das gesteuerte Licht entnehmbar ist.

Für eine Vielzahl von Anwendungen auf dem Gebiet der Optik, beispielsweise in der Informationsverarbeitung, in der Lasertechnik und für viele geodätische, astronomische und navigatorische Anwendungen werden Anordnungen benötigt, die Licht schalten, zwischen optischen Kanälen umschalten oder modulieren können.

Bei bekannten derartigen elektro-optischen Schaltern und Modulatoren werden entweder optisch wirksame Festkörperkristalle oder Flüssigkristalle verwendet. Transparente Kristalle, wie sie beispielsweise aus LiNbO₃ herstellbar sind, benötigen hohe Arbeitsspannungen, erlauben nur geringe Aperturen und sind kostenspielig. Wegen der kleinen zulässigen Lichtbündeldurchmesser sind sie zur Schaltung von Lichtbündeln, welche Abbildungen enthalten, wenig geeignet. Infolge der ihnen eigenen hohen Dispersion ist außerdem die Verwendung von monochromatischen Lichtquellen (Laser) erforderlich. Die optischen und elektrischen Parameter verändern sich im Gebrauch und verschlechtern somit die Eigenschaften des elektro-optischen Schalters bzw. Modulators. Außerdem geht die Hälfte des Lichtes verloren, da diese Schalter und Modulatoren in Verbindung mit Polarisatoren eingesetzt werden.

Bei bezüglich dieser Eigenschaften verbesserten optischen Modulatoren, die durch DE 30 13 498 A1 und GB 2 046 937 bekanntgeworden sind, werden beide Polarisationsrichtungen in Verbindung mit einem polarisierenden Strahlenteiler genutzt. Die übrigen genannten Nachteile bleiben jedoch bestehen. Ferner ist es bei dem bekannten Modulator nachteilig, daß sie eine Arbeitsspannung von über 100 V benötigen. Außerdem entstehen durch eine notwendige Kaskadierung des Modulators erhebliche Kosten.

Bei einer anderen bekannten Anordnung, die von Hirabayashi, T. Kurokawa in "Liquid crystal devices for optical communication and information processing Systems", Liquid Crystals Vol. 14, pp 307-317 (1993), beschrieben wurde, wird ein nematischer Flüssigkristall in sogenannter Twist-Anordnung genutzt. Dabei lassen sich größere Aperturen erreichen. Nachteilig bei nematischen Flüssigkristallen sind jedoch ihre große Schaltzeit von beispielsweise einigen 100 ms und Probleme bei der Darstellung von Zwischenwerten.

Durch Chiung-Shevy Wu, Shine Tsou Wu: "New liquid crystal operation modes", Vol. 2949 SPIE, Image Sciences and Display Technologies. Proc. Berlin Conf., FRG 7-10 (1996) ist ein Modulator bekanntgeworden, bei dem die von einem polarisierenden Strahlenteiler erzeugten beiden Polarisationszustände s und p in Gegenrichtung durch eine elektro-optische Flüssigkristallzelle geführt werden. Dieses führt zu hohen Rotationswinkeln. Jedoch sind die Zellen mit einer Schaltfrequenz von etwa 10 Hz zu langsam.

Eine Anordnung nach dem Oberbegriff von Anspruch 1 ist durch JP 61 261 725 A bekanntgeworden, bei der ein nematischer Flüssigkristall in zwei Richtungen von polarisiertem Licht durchströmt wird. Bei dieser Anordnung, die zum Schalten des Lichts zwischen den beiden Zuständen Aus und Ein vorgesehen ist, ist der erforderliche Drehwinkel der Flüssigkristallmoleküle recht groß, so daß eine hohe Spannung zum Umschalten benötigt wird und auch die Schaltzeit recht groß ist.

Aus DE 196 31 644 ist eine Anordnung zum Schalten von optischen Mustern bekannt, die eine hohe Schalteffizienz aufweist und mit der unpolarisiertes, polychromatisches Licht hinreichend schnell geschaltet werden kann. Die Anordnung ist aber sehr kompliziert und aufwendig, da sie eine Vielzahl von Flüssigkristallzellen zur Reduzierung der Schaltzeiten benötigt. Sie ist für einen breiten Einsatz zu teuer.

Aufgabe der vorliegenden Erfindung ist es, eine Anordnung zur elektrischen Steuerung der Intensität von unpolarisiertem Licht anzugeben, die bei geringer Steuerspannung, wie sie beispielsweise in üblichen Transistorschaltungen und integrierten Schaltungen zur Verfügung steht, eine schnelle Steuerung ermöglichen. Dabei soll ferner eine hohe Schalteffizienz erreicht werden, das heißt, eine hohe Transparenz im Ein-Zustand und eine möglichst hohe Dämpfung des zugeführten Lichtes im Aus-Zustand. Es soll möglich sein, das Licht mit ebenfalls hoher Effizienz zwischen verschiedenen Kanälen umzuschalten.

Diese Aufgabe wird bei der erfindungsgemäßen Anordnung dadurch gelöst, daß die elektro-optische Einrichtung aus mindestens zwei hintereinander geschalteten, elektrisch steuerbaren Flüssigkristallzellen besteht, welche zwischen Elektroden eingebettet sind und welche die Polarisation hindurchgeführter Lichtbündel in Abhängigkeit der an die Elektroden angelegten Steuerspannung ändern.

Die erfindungsgemäße Anordnung kann derart weitergebildet werden, daß die von dem Strahlenteiler aus gesehen letzte Elektrode der Flüssigkristallzellen unter Bildung der zweiten reflektierenden Einrichtung reflektierend ist.

Eine vorteilhafte Ausführungsform dieser Weiterbildung besteht darin, daß die Flüssigkristallzellen durch nematische Flüssigkristalle mit positiver dielektrischer Anisotropie gebildet sind, deren Dicked eine der Bedingungen δn·d = lambda/4+N·lambda, δn·d = 3/8·lambda+N·lambda, δn·d = lambda/2+N·lambda erfüllt, wobei N eine ganze Zahl und δn die Doppelbrechung des Flüssigkristalls ist.

Bei einer anderen Weiterbildung ist vorgesehen, daß die Flüssigkristallzellen durch ferroelektrische Flüssigkristalle, welche zwischen Elektroden eingebettet sind und welche die Polarisation hindurchgeführter Lichtbündel in Abhängigkeit der an die Elektroden angelegten Steuerspannung ändern, gebildet sind.

Dabei kann ebenfalls vorgesehen sein, daß die von dem Strahlenteiler aus gesehen letzte Elektrode der Flüssigkristallzellen unter Bildung der zweiten reflektierenden Einrichtung reflektierend ist.

Der ferro-elektrische Effekt hat den Vorteil, daß infolge des kleinen Drehwinkels und der schnellen Drehung der langsamen Achse sehr kurze Schaltzeiten erreicht werden können.

Eine vorteilhafte Ausgestaltung dieser Weiterbildung besteht darin, daß die Dicked der ferroelektrischen Flüssigkristalle der Flüssigkristallzellen eine der Bedingungen δn·d = lambda/4+N·lambda, δn·d = 3/8·lambda+N·lambda, δn·d = lambda/2+N·lambda erfüllen, wobei N eine ganze Zahl und δn die Doppelbrechung der Flüssigkristalle ist.

Die erfindungsgemäße Anordnung läßt sich zur schnellen Verarbeitung von Grauwertskalen und als schneller optischer Schalter bei niedriger Schalterspannung verwenden sowie als aktives Element zur automatischen Kontrolle von Lichtintensitäten in Rückkoppelungsschleifen mit geeigneten Lichtquellen. Er kann in faser-optischen Aufbauten sowie in optischen Parallelprozessoren zur Verarbeitung von Nachrichten eingesetzt werden.

Die erfindungsgemäße Anordnung läßt sich ferner als optischer Begrenzer in Brillen, Videokameras oder in der optischen Nachrichtenübertragung einsetzen. In Folge der geringen Verluste und der hohen Effizienz sind auch Anwendungen für Laserlicht mit hoher Leistung möglich.

Gegenüber den bekannten elektro-optischen Schaltern und Modulatoren hat die erfindungsgemäße Anordnung mehrere Vorteile. Die Schalteffizienz beträgt für unpolarisiertes Licht mehr als 99% zwischen den beiden Schaltzuständen. Die an sich schon geringen Verluste durch Reflexionen an den optischen Flächen der einzelnen Komponenten bei der erfindungsgemäßen Anordnung können durch Antireflexschichten weiter vermindert werden.

Bei der erfindungsgemäßen Anordnung werden je nach Ausführungsform im einzelnen kleine Drehwinkel der optischen Indikatrix des Flüssigkristalls im elektrischen Feld benötigt. Daraus ergibt sich eine Fülle von Möglichkeiten für die Anwendung verschiedener elektro-optischer Effekte von Flüssigkristallen in der erfindungsgemäßen Anordnung. Insbesondere bei der Anwendung von Flüssigkristallen mit dem SSFLC-Effekt lassen sich Schaltzeiten im Bereich von µs erreichen. Der SSFLC-Effekt ist beispielsweise beschrieben in N. Clark et al. Appl. Phys. Lett. 36,899 (1980); US-Patent 4,563,059 vom 7. Jan. 1986.

Mit der erfindungsgemäßen Anordnung lassen sich in vorteilhafter Weise Zwischenwerte zwischen dem Ein- und dem Aus-Zustand einstellen, so daß eine Grauwert-Modulation mit Zeitkonstanten im Mikro- und Submikrosekundenbereich bei Anwendung des elektroklinen Effektes möglich ist.

Bei Anwendung des DHF-Effektes (deformed helix ferro-electric effect) in der helixförmigen smektischen C-Phase können Arbeitsspannungen von etwa 1V und Zeitkonstanten von etwa 100 µs erreicht werden.

Außerdem hat die erfindungsgemäße Anordnung den Vorteil, daß die Schalteffizienz von der Farbe des Lichtes nur äußerst geringfügig abhängig ist. Deshalb ist die erfindungsgemäße Anordnung auch für Farbbilder hervorragend geeignet. Schließlich ergibt sich als weiterer Vorteil ein einfacher und kostengünstiger Aufbau der erfindungsgemäßen Anordnung.

Die meisten Vorteile der erfindungsgemäßen Anordnung beruhen darauf, daß durch den doppelten Durchgang durch das elektro-optische Element die elektrische Drehung der Indikatrix des Flüssigkristalls auch in Verbindung mit der Verzögerungsplatte viel kleiner sein kann als bei einmaligem Durchgang, um einen gewünschten Rotationswinkel zu erreichen.

Bei einer vorteilhaften Weiterbildung der erfindungsgemäßen Anordnung ist vorgesehen, daß im Weg der parallel verlaufenden polarisierten Lichtbündel ferner eine Verzögerungsplatte angeordnet ist, wobei die Verzögerungsplatte eine optische Stärke von einem Viertel der Wellenlänge des Lichtes oder bei breitbandigem Licht der Schwerpunktwellenlänge aufweist.

Eine realtiv kurze Baulänge ergibt sich bei anderen vorteilhaften Ausgestaltungen der erfindungsgemäßen Anordnung dadurch, daß die erste reflektierende Einrichtung aus zwei Spiegeln, zwei 90°-Prismen oder zwei Pentaprismen besteht und derart ausgebildet ist, daß die polarisierten Lichtbündel senkrecht zu der Ebene verlaufen, die durch die Achsen des zugeführten und des gesteuerten Lichts aufgespannt wird.

Ausführungsbeispiele der Erfindung sind in der Zeichnung anhand mehrerer Figuren dargestellt und in der nachfolgenden Beschreibung näher erläutert. Es zeigt:
- Fig. 1: (a) und (j) Prinzip-Skizzen erfindungsgemäßer Anordnungen,
- Fig. 2: (a) bis (d) zwei elektro-optische Schalter nach dem Stand der Technik in verschiedenen Betriebszuständen,
- Fig. 3: (a) bis (d) Ausführungsbeispiele von als Kreuzschalter ausgeführten erfindungsgemäßen Einrichtungen,
- Fig. 4: (a) bis (d) schematische Darstellungen von Anordnungen für einen Kanal,

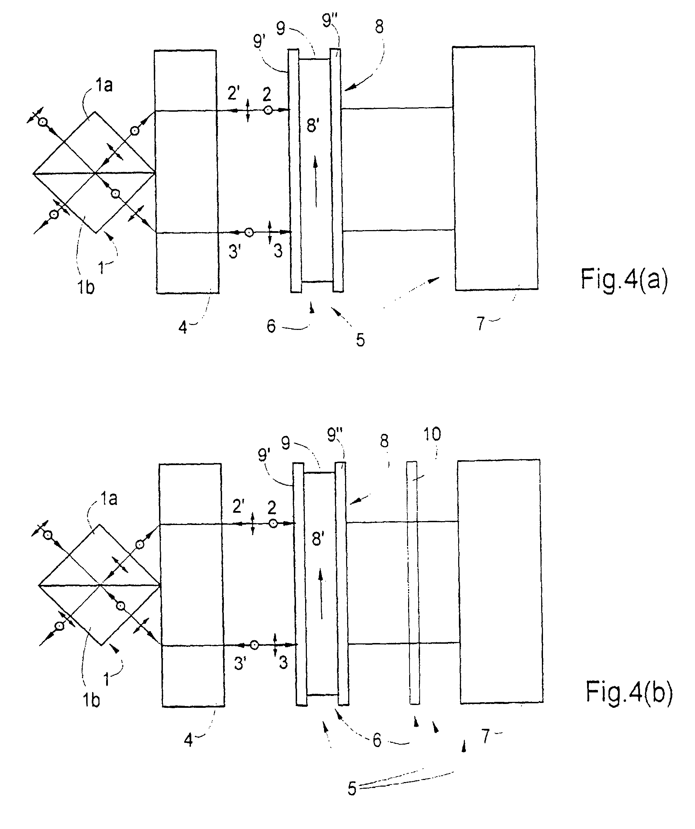

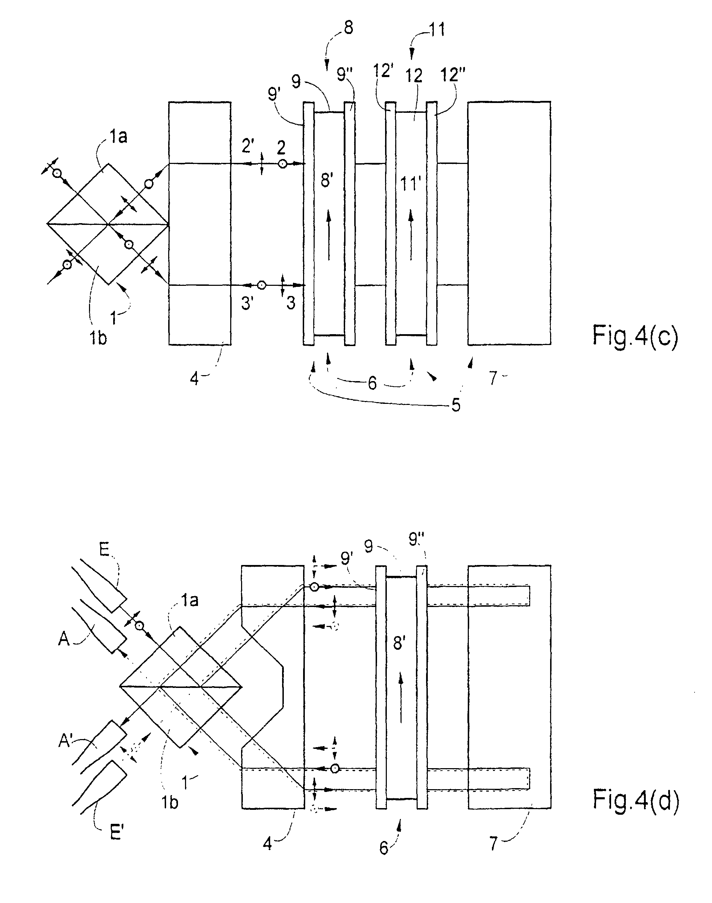

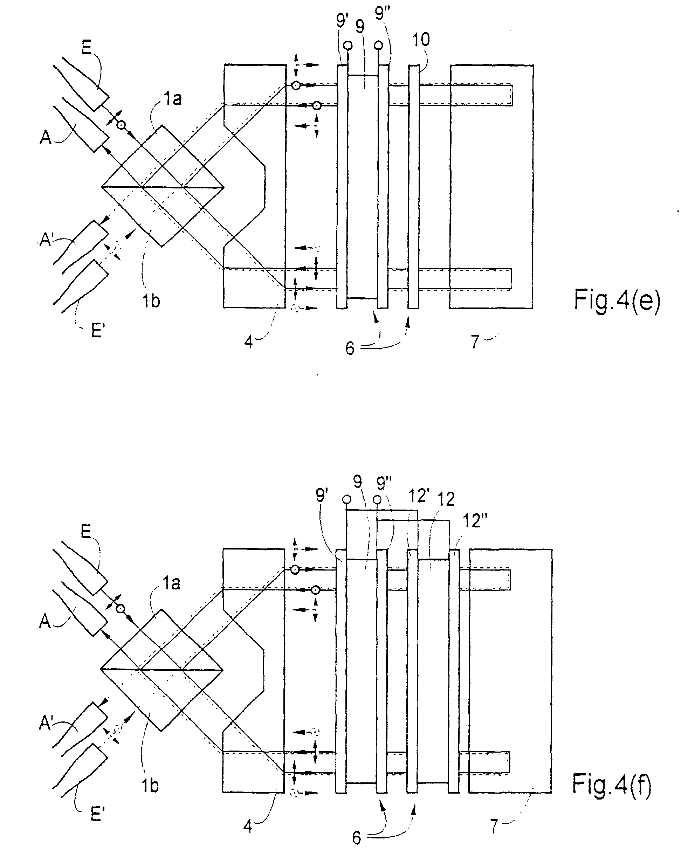

- Fig. 4: (e) und (f) schematische Darstellungen von Anordnungen für zwei Kanäle,

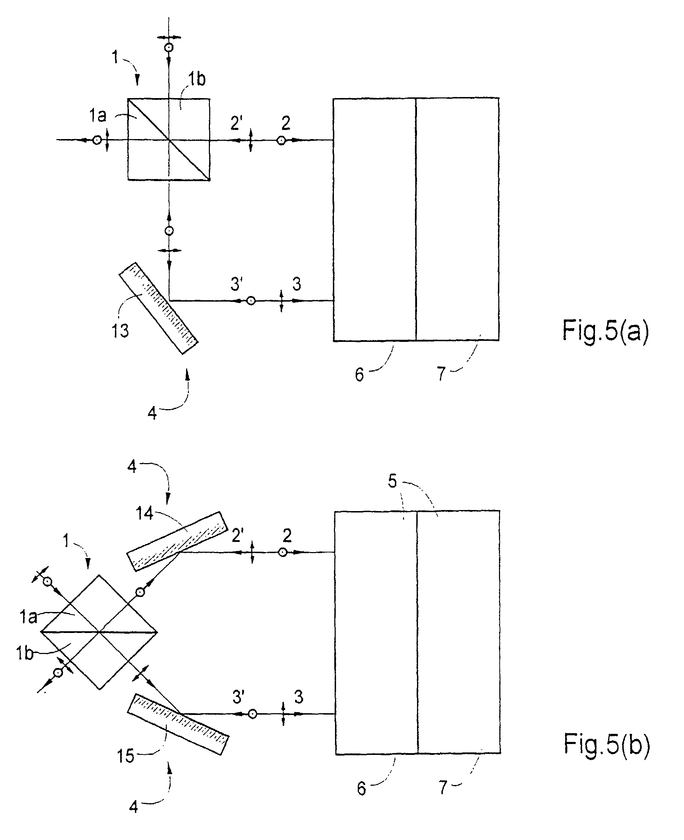

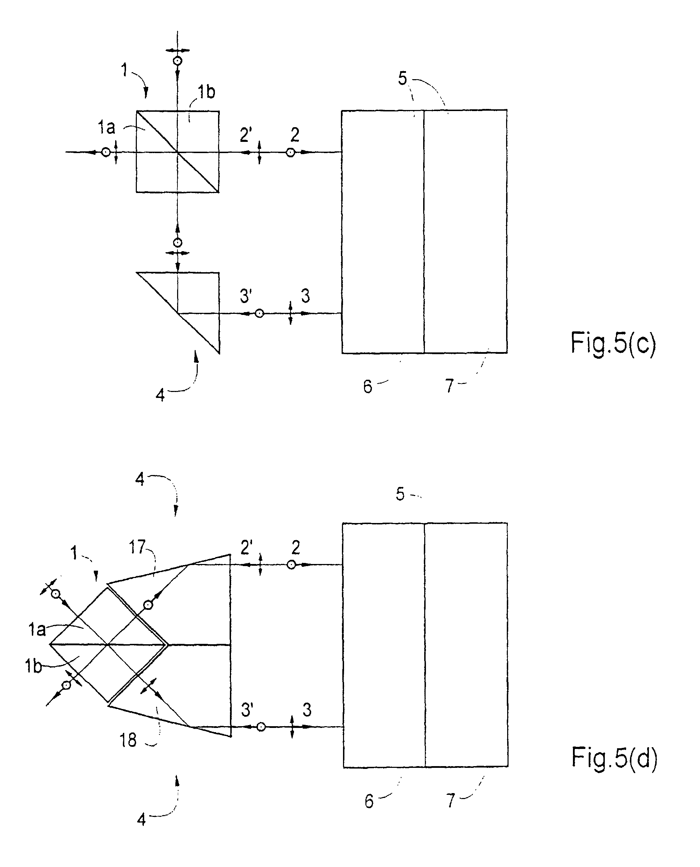

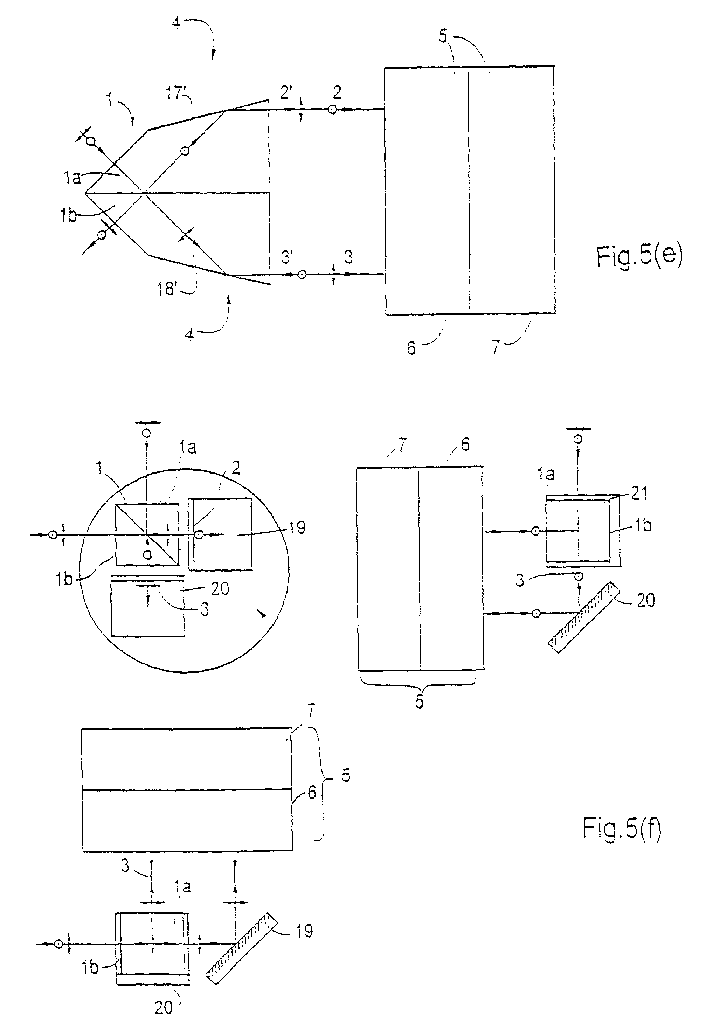

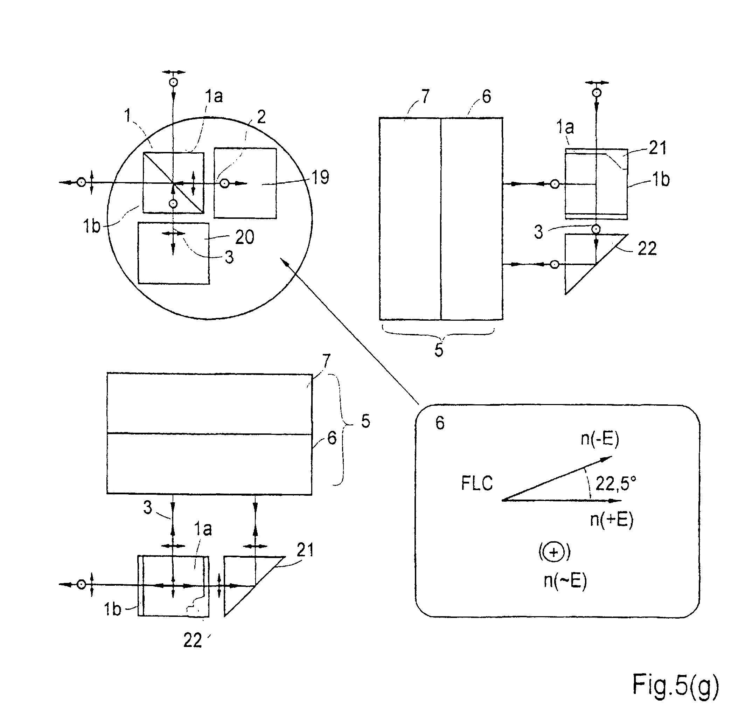

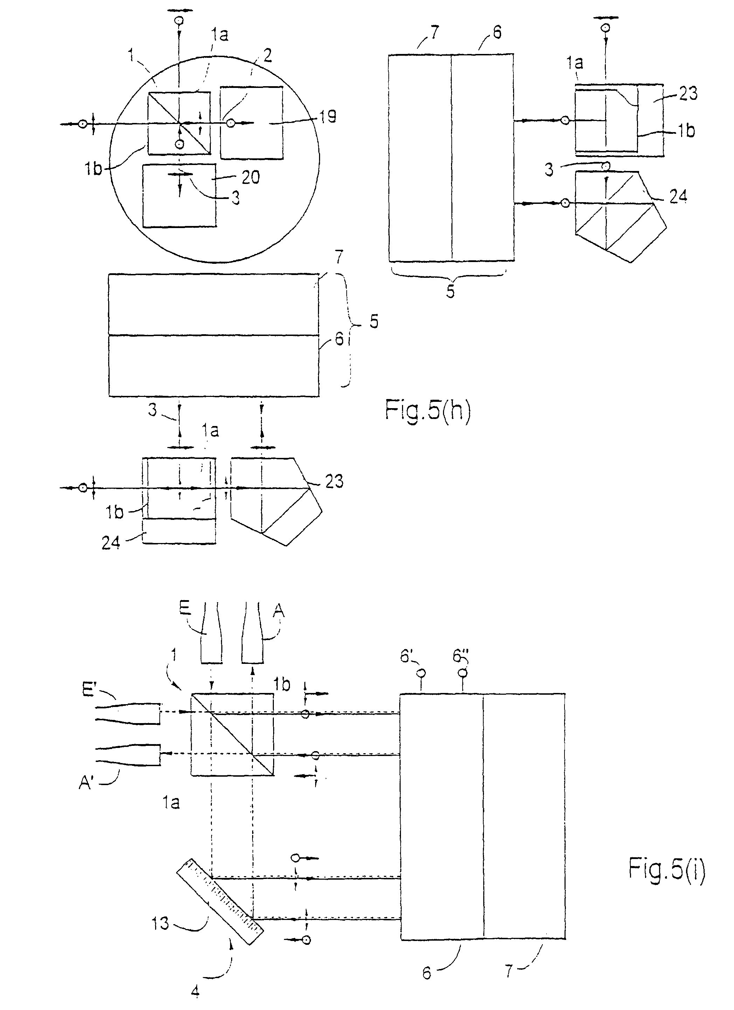

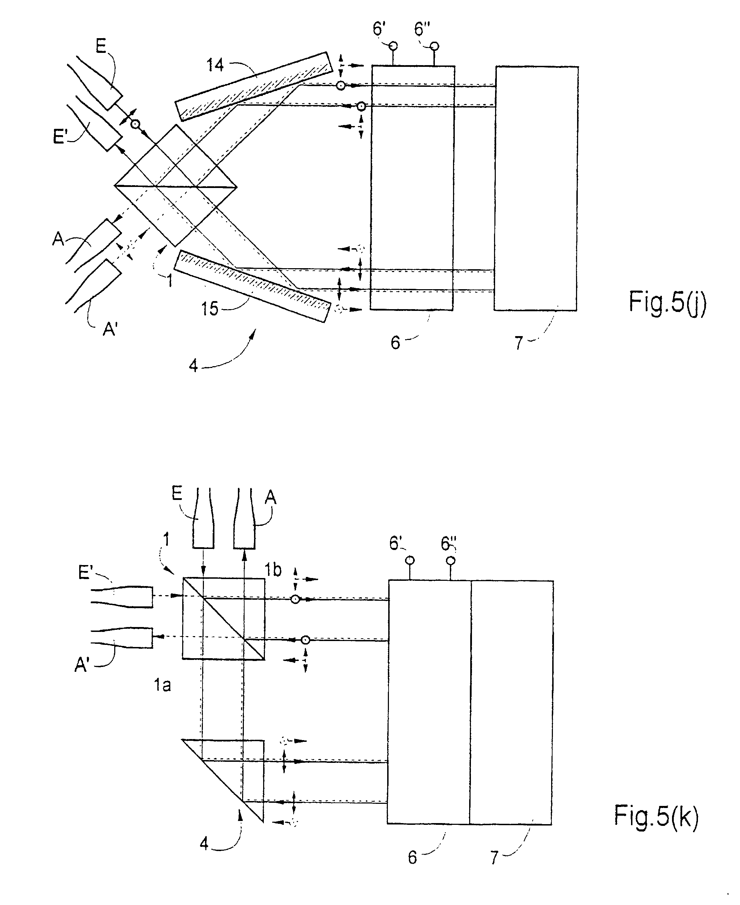

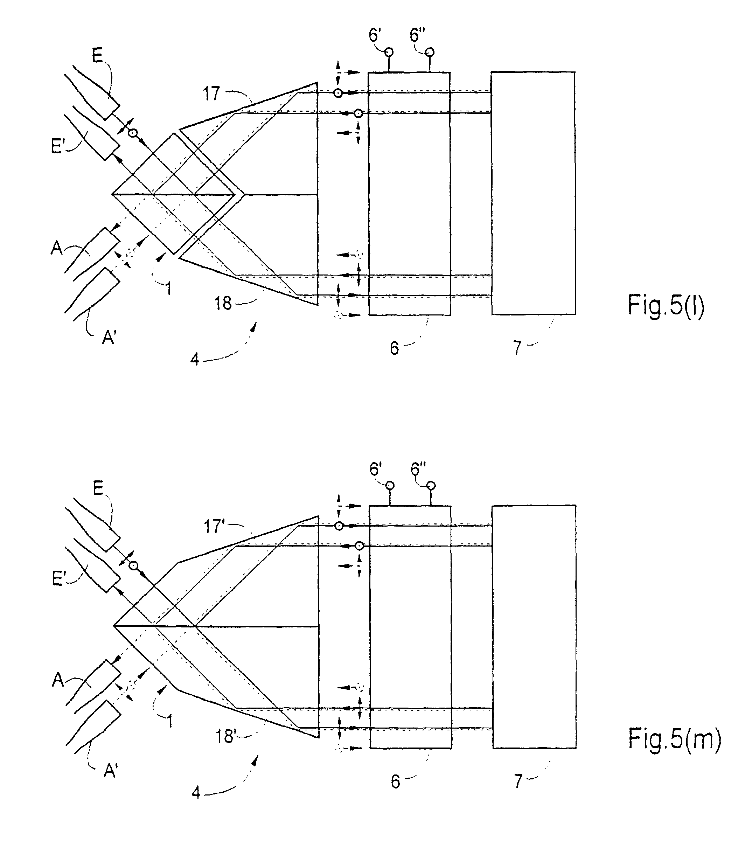

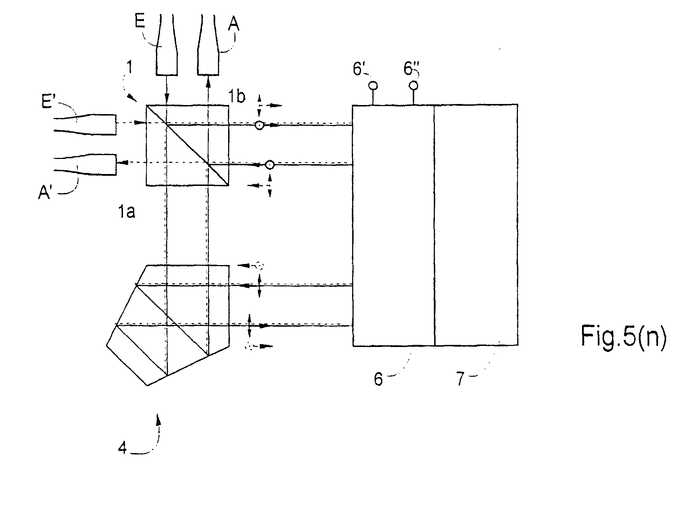

- Fig. 5: (a) bis (h) verschiedene Ausführungsbeispiele der ersten reflektierenden Einrichtung bei lediglich schematischer Darstellung des elektro-optischen Elementes und der zweiten reflektierenden Einrichtung für einen Kanal,
- Fig. 5: (i) bis (n) verschiedene Ausführungsbeispiele der ersten reflektierenden Einrichtung bei lediglich schematischer Darstellung des elektro-optischen Elementes und der zweiten reflektierenden Einrichtung für zwei Kanäle,

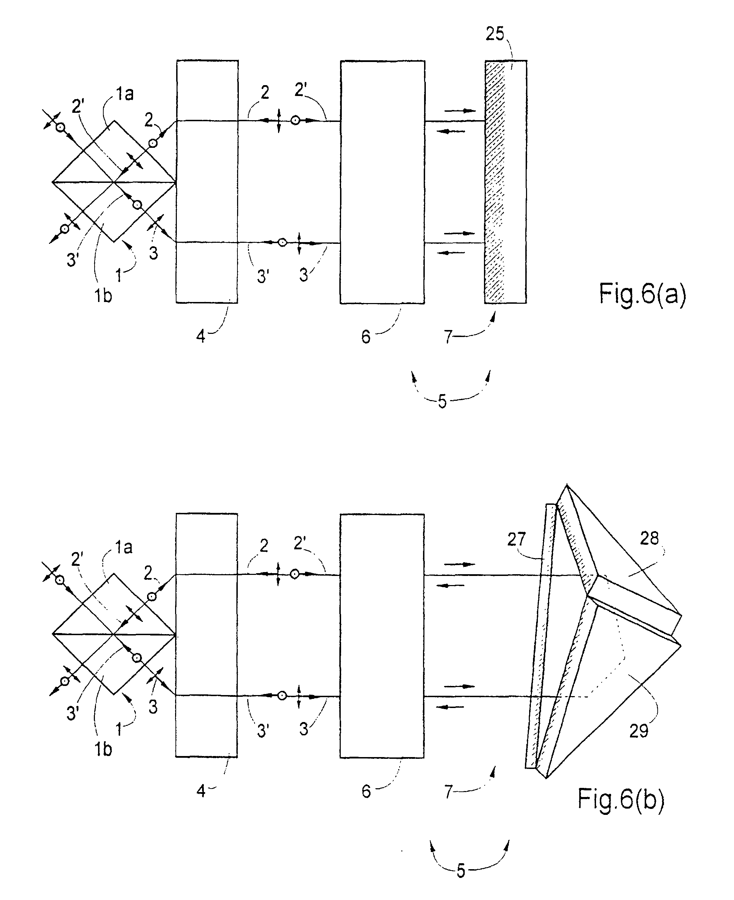

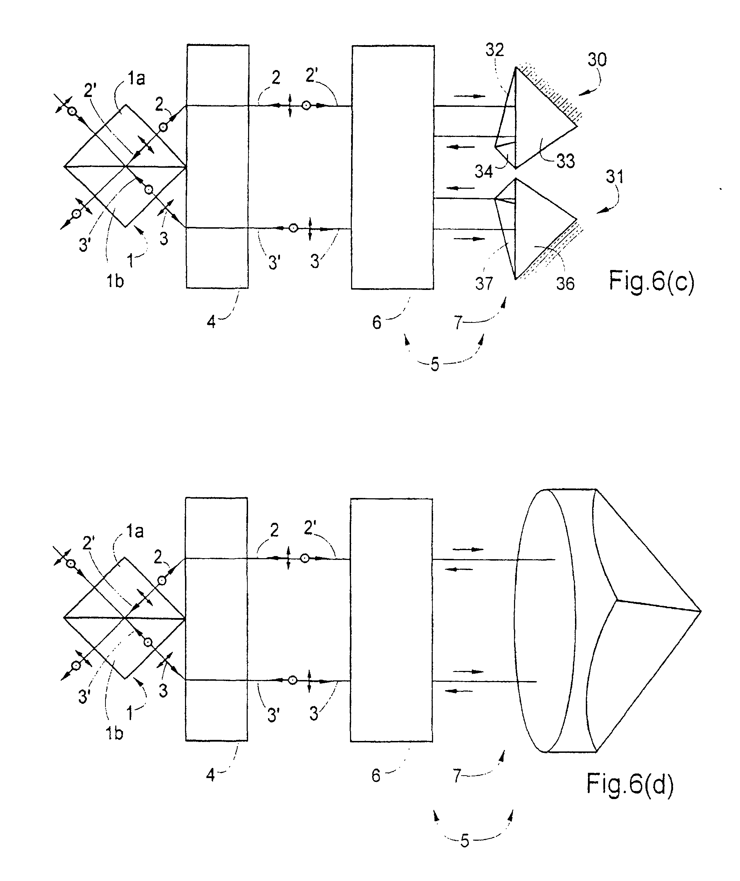

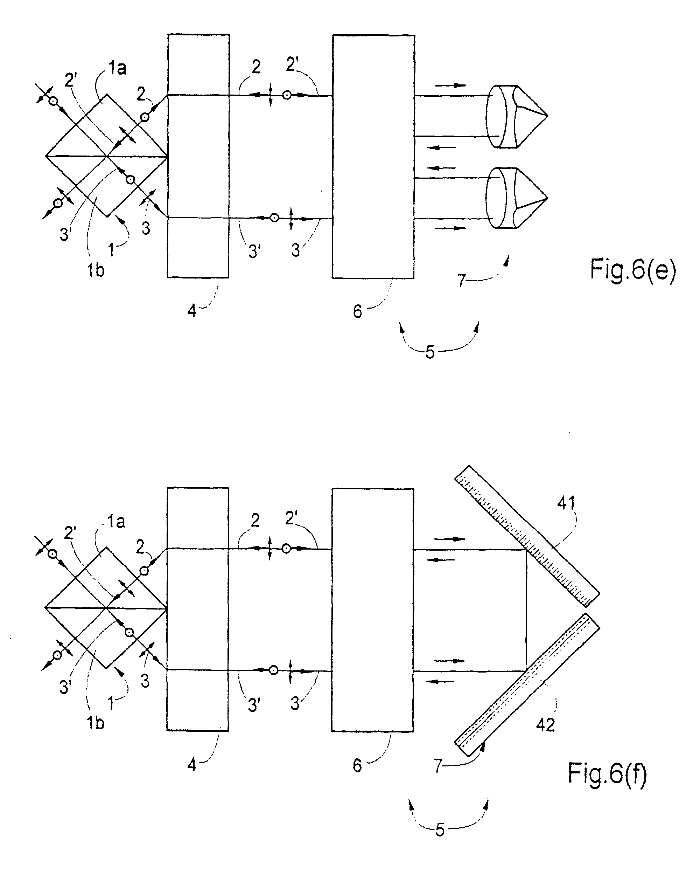

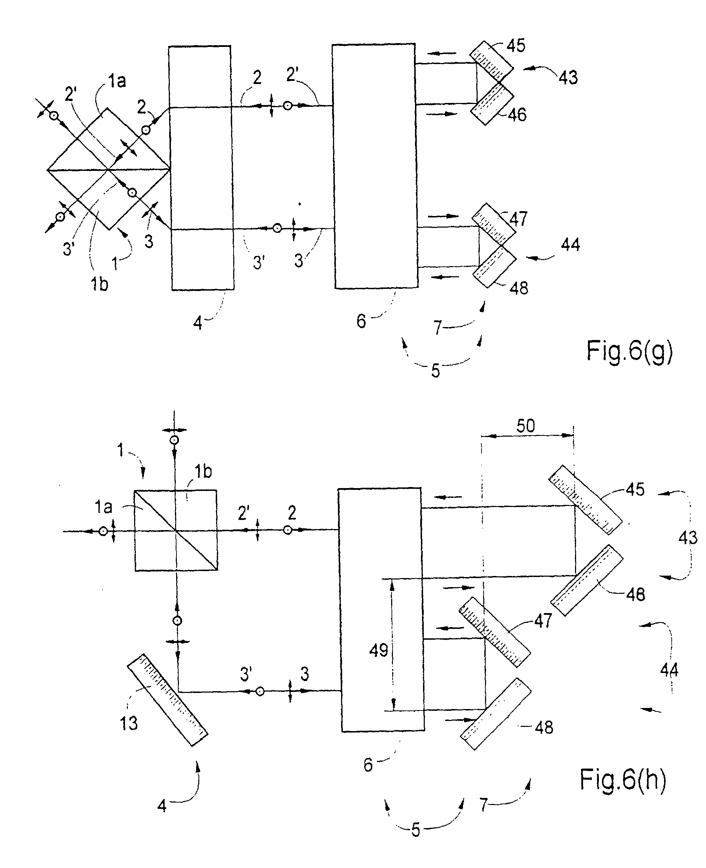

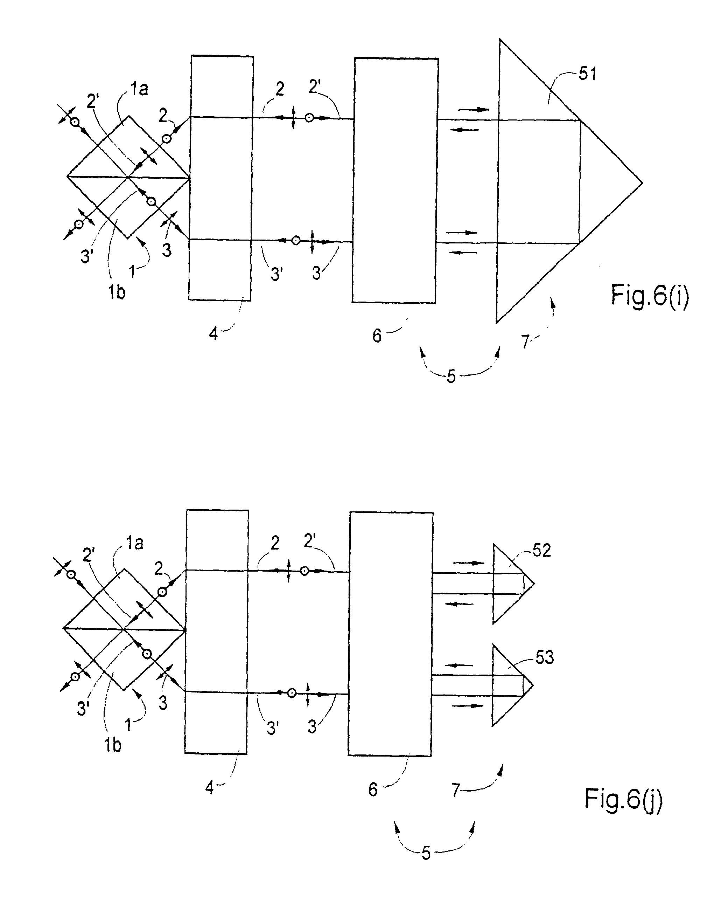

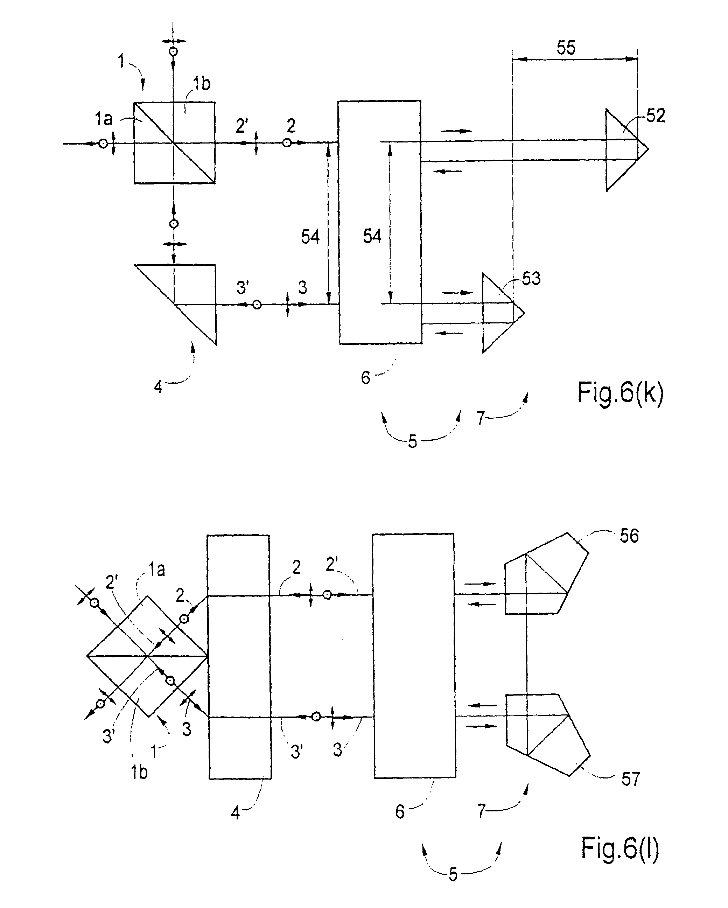

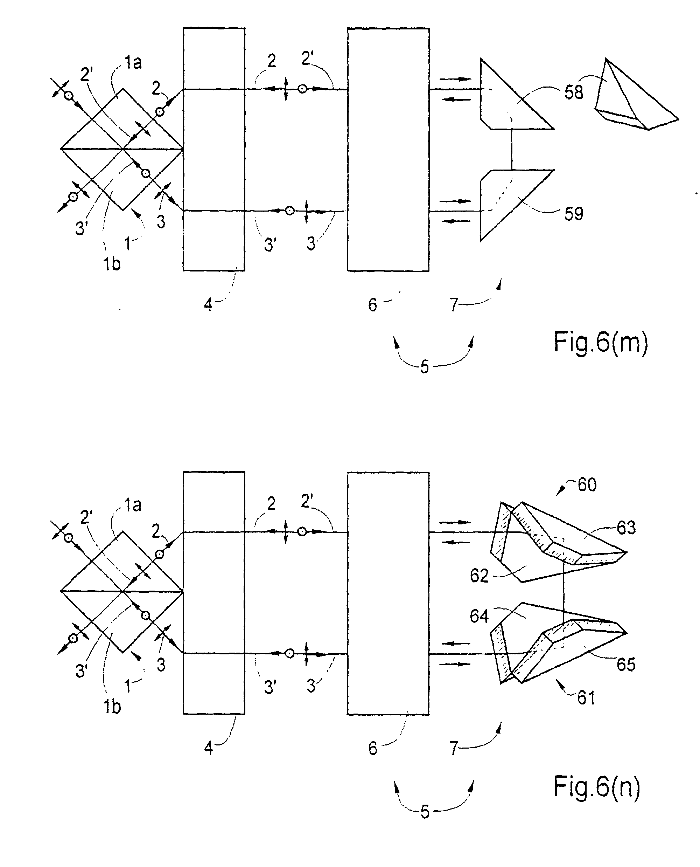

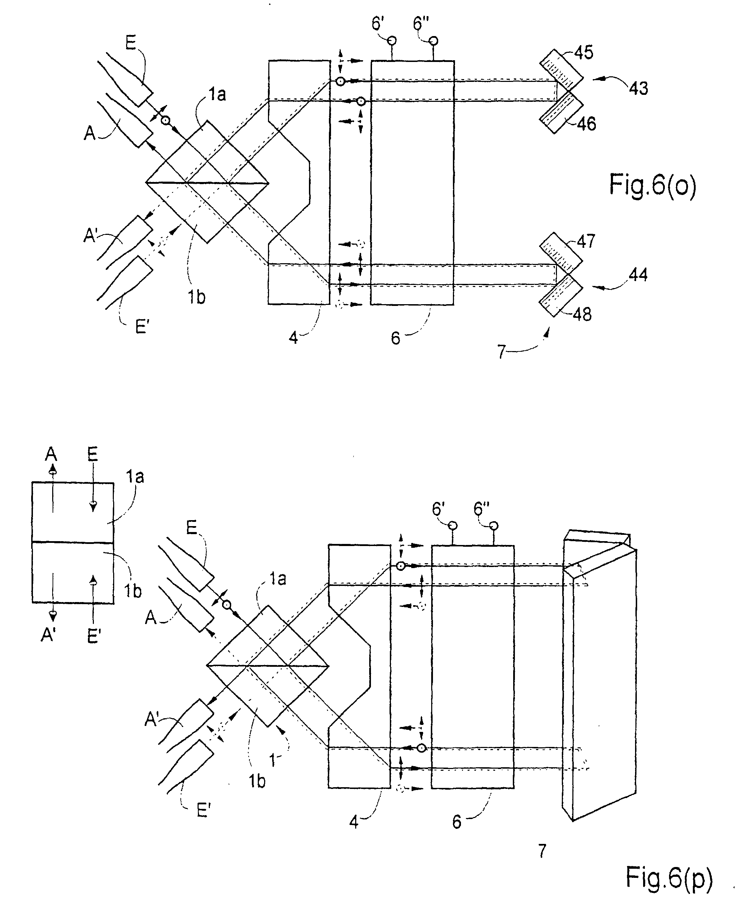

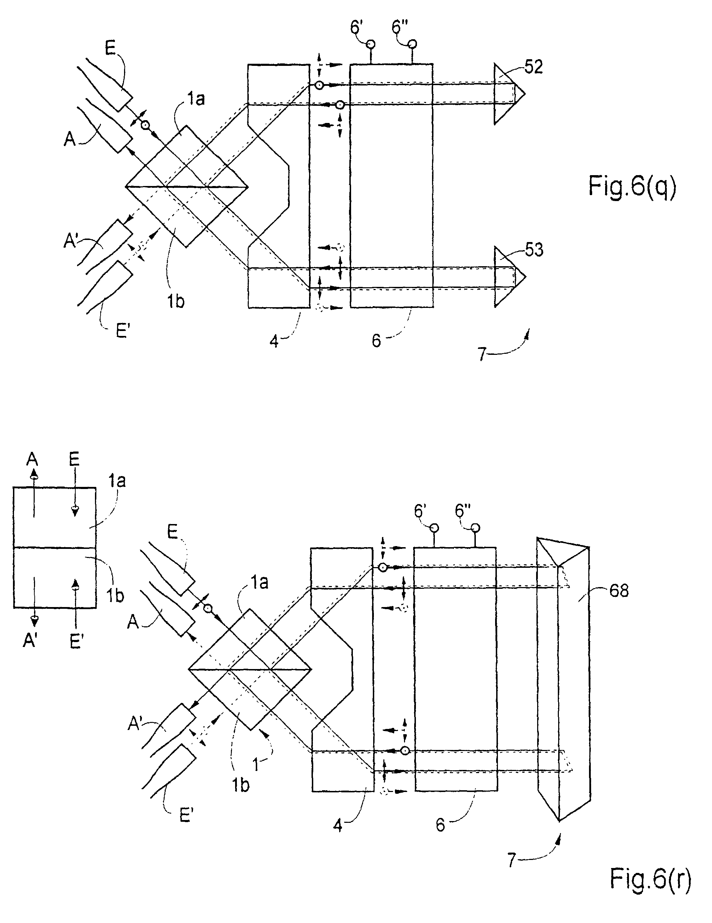

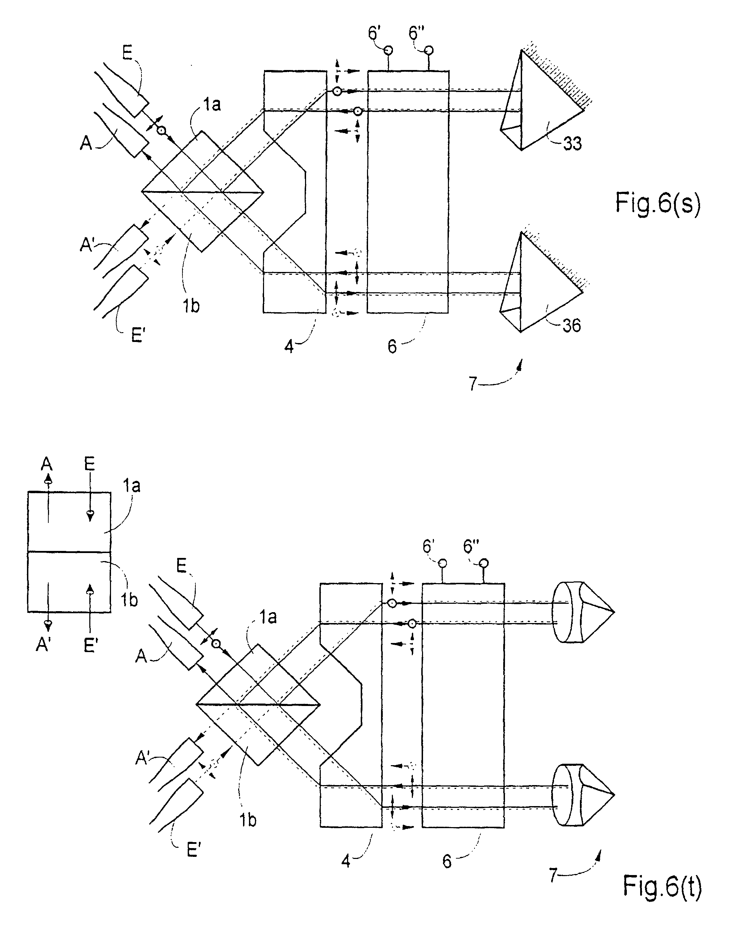

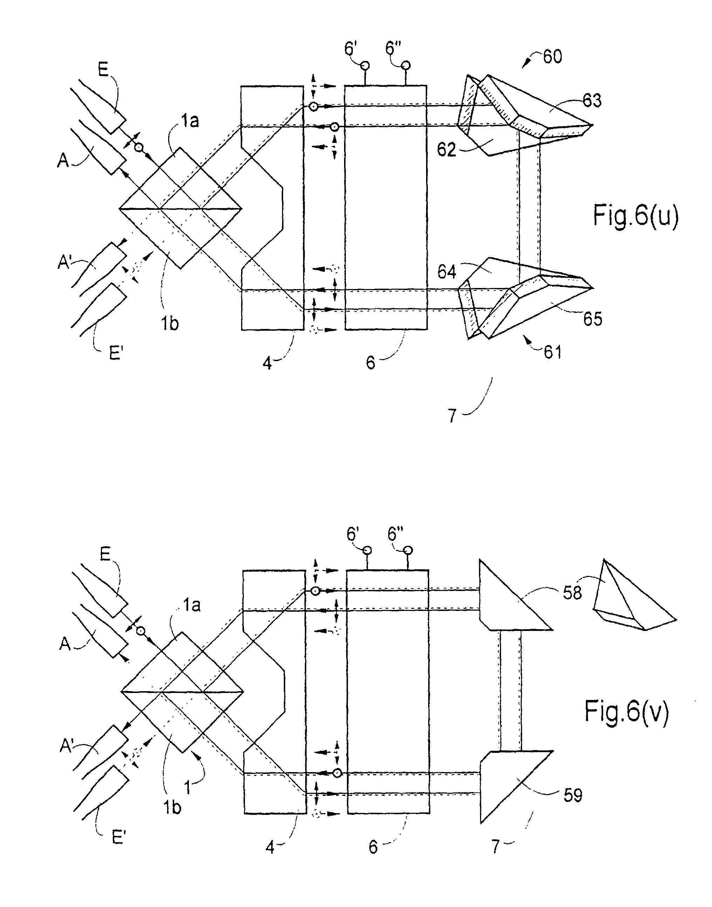

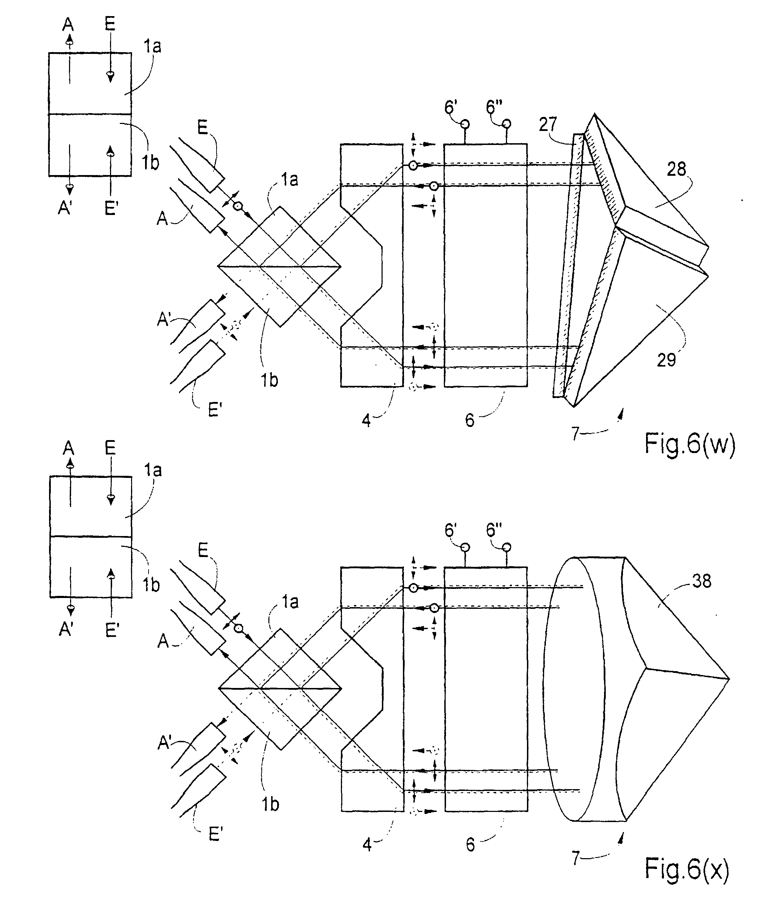

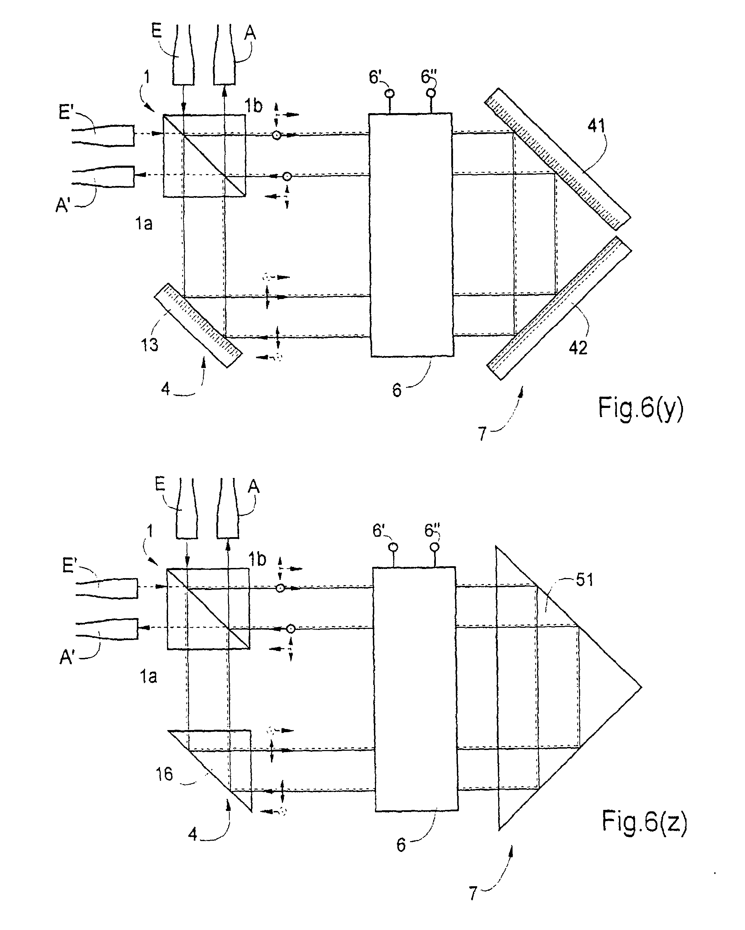

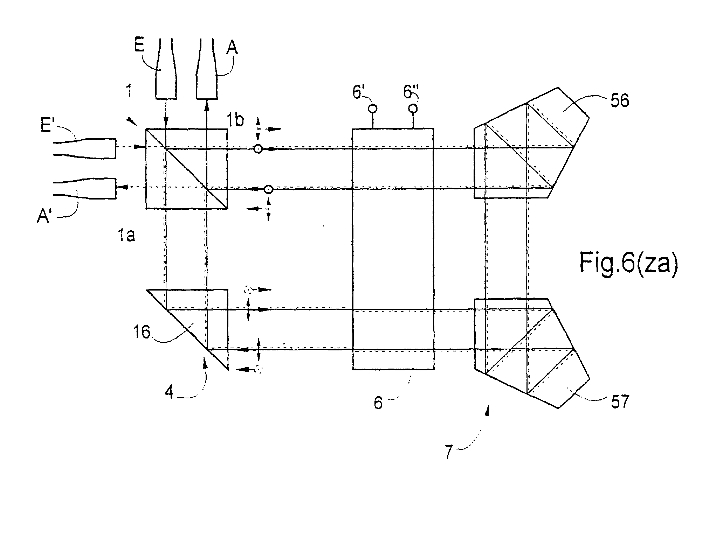

- Fig. 6: (a) bis (n) verschiedene Ausführungsbeispiele für die zweite reflektierende Einrichtung bei lediglich schematischer Darstellung des elektro-optischen Elementes und der ersten reflektierenden Einrichtung für einen Kanal,
- Fig. 6: (o) bis (za) verschiedene Ausführungsbeispiele für die zweite reflektierende Einrichtung bei lediglich schematischer Darstellung der ersten reflektierenden Einrichtung und des elektro-optischen Elementes für zwei Kanäle,

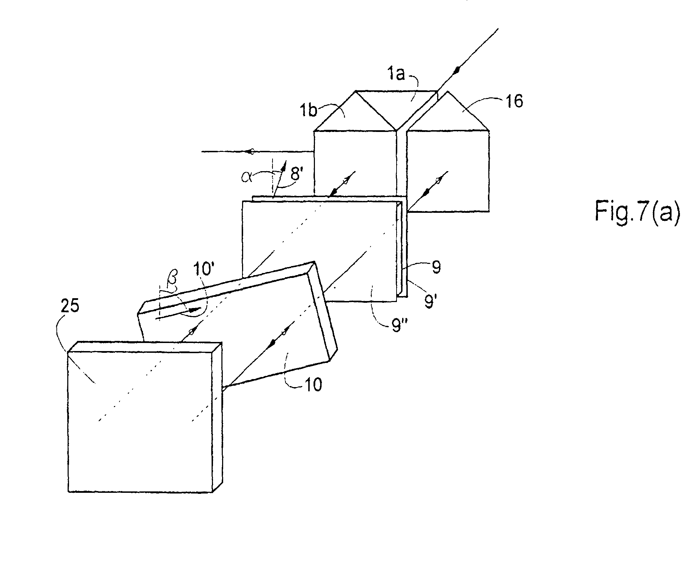

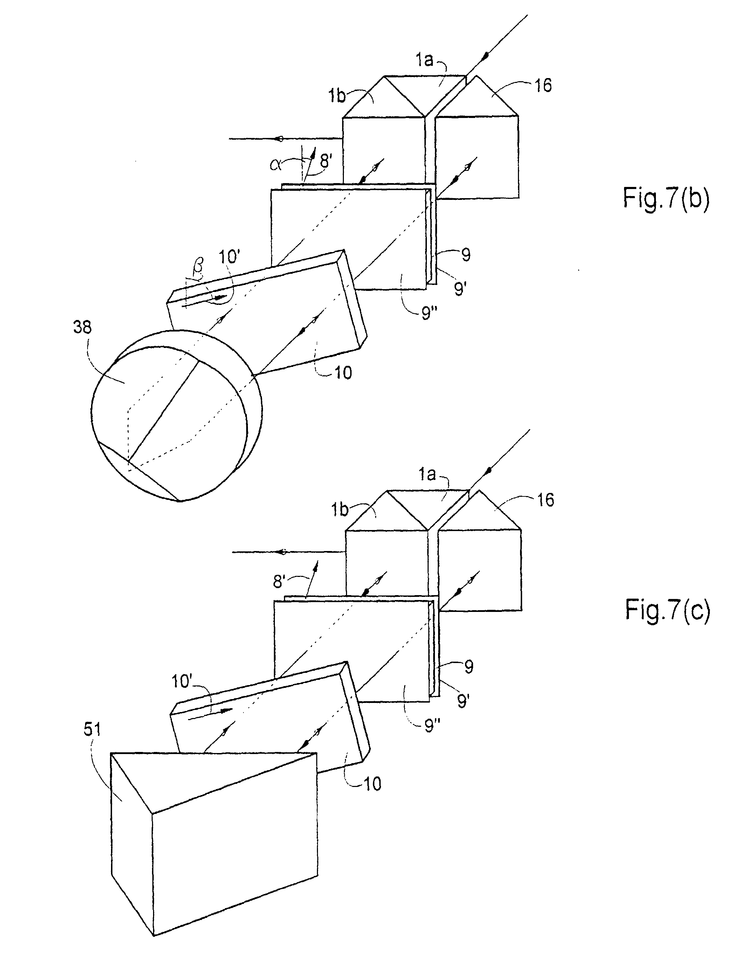

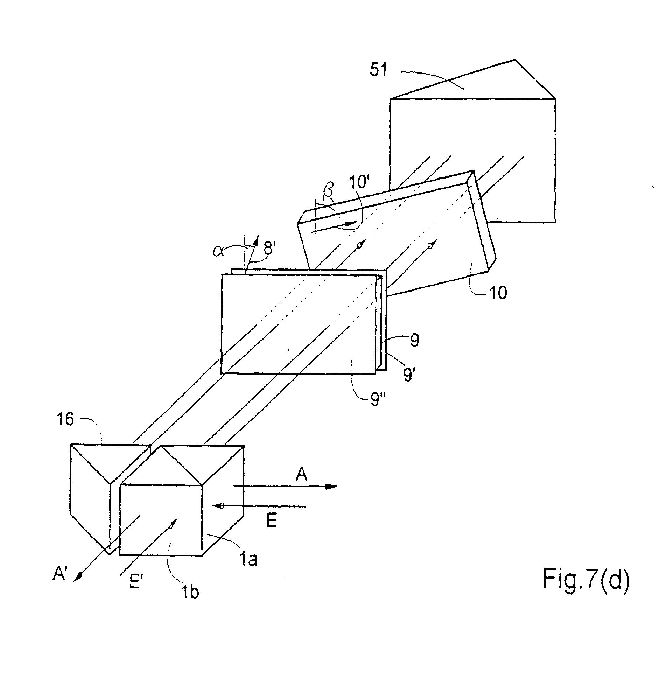

- Fig. 7: (a) bis (d) mehrere Anordnungen in perspektivischer Darstellung,

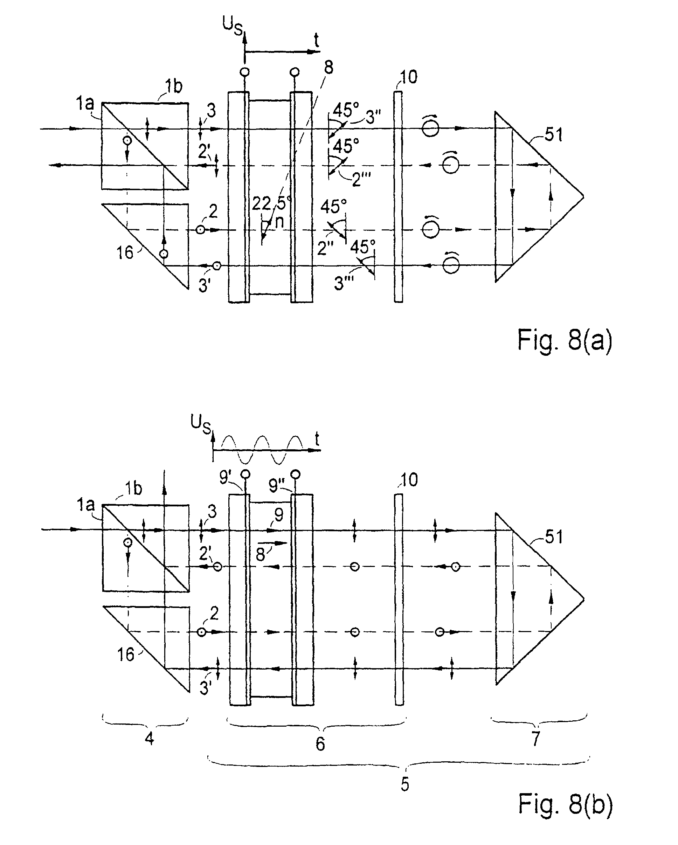

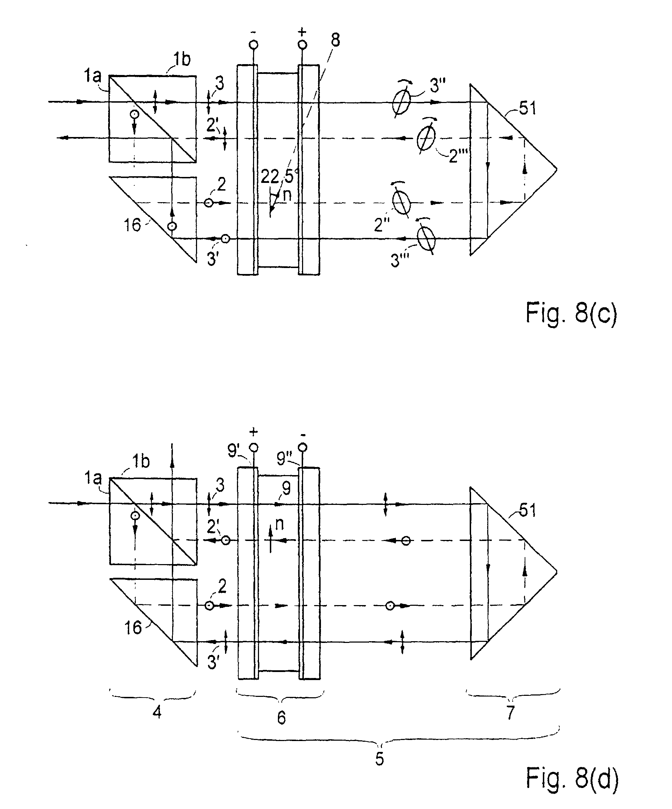

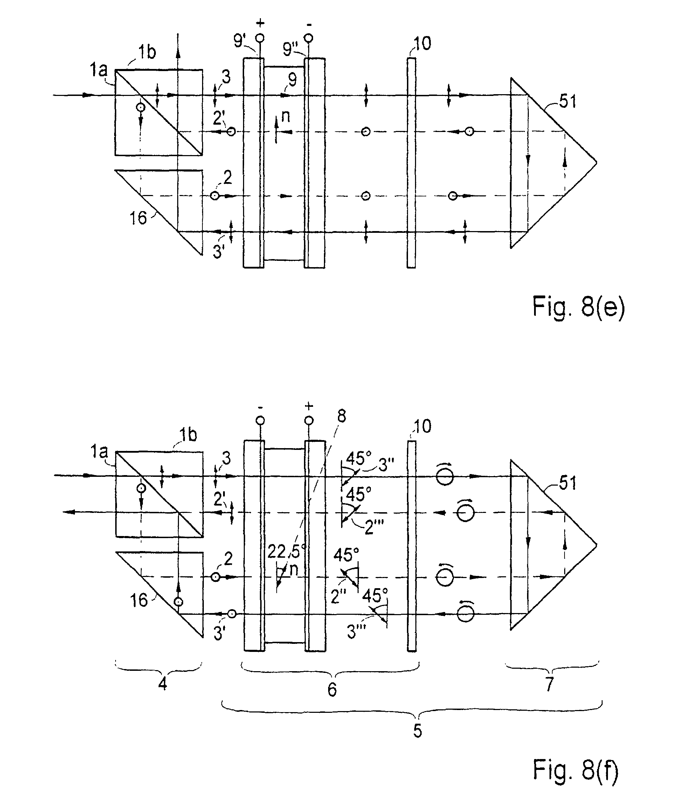

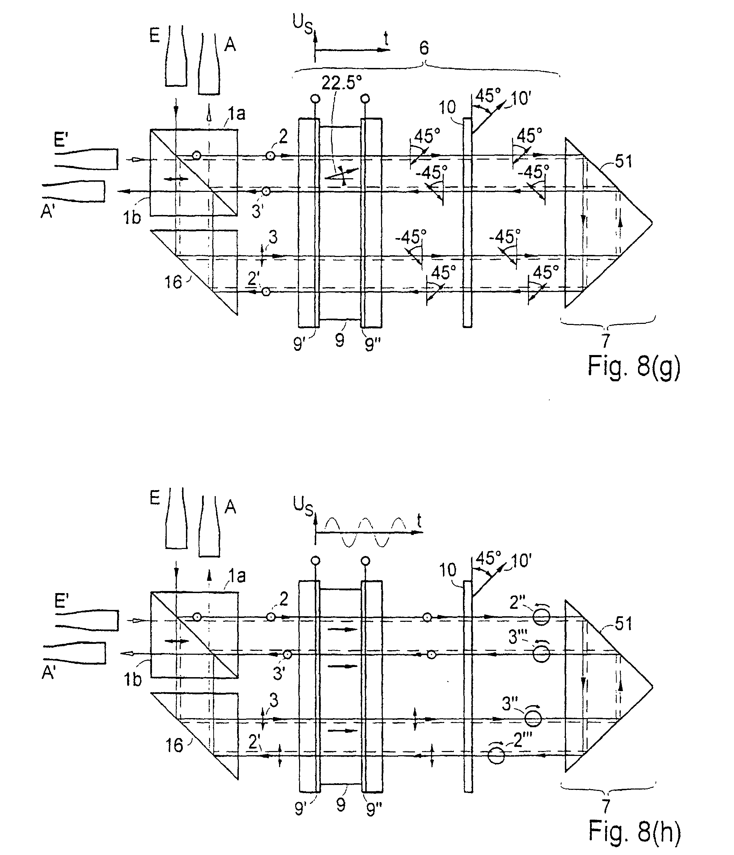

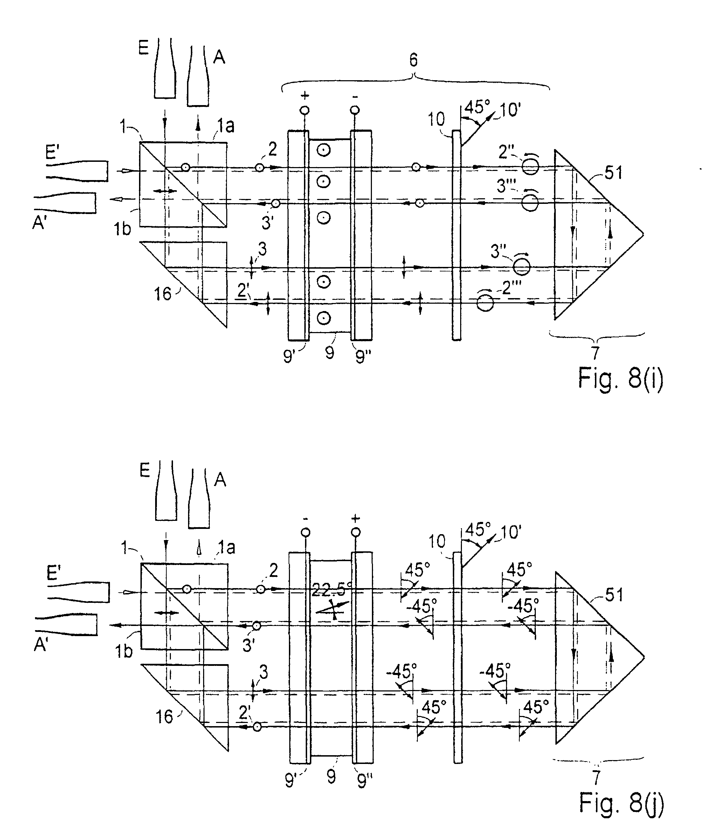

- Fig. 8: (a) und (b) eine Anordnung für einen Kanal mit jeweils einem Prisma als reflektierende Einrichtung, einer nematischen Flüssigkristallzelle und einer Verzögerungsplatte in zwei Betriebszuständen,
- Fig. 8: (c) und (d) eine Anordnung wie in den Figuren 8(a) und (b), jedoch ohne Verzögerungsplatte,
- Fig. 8: (e) und (f) eine Anordnung wie in den Figuren 8(a) und (b), jedoch mit einer ferro-elektrischen Flüssigkristallzelle,
- Fig. 8: (g) und (h) eine Anordnung für zwei Kanäle mit Prismen als reflektierende Einrichtungen, einer nematischen Flüssigkristallzelle und einer Verzögerungsplatte in zwei Betriebszuständen,
- Fig. 8: (i) und (j) eine Anordnung wie in den Figuren 8(g) und (h), jedoch mit einer ferro-elektrischen Flüssigkristallzelle,

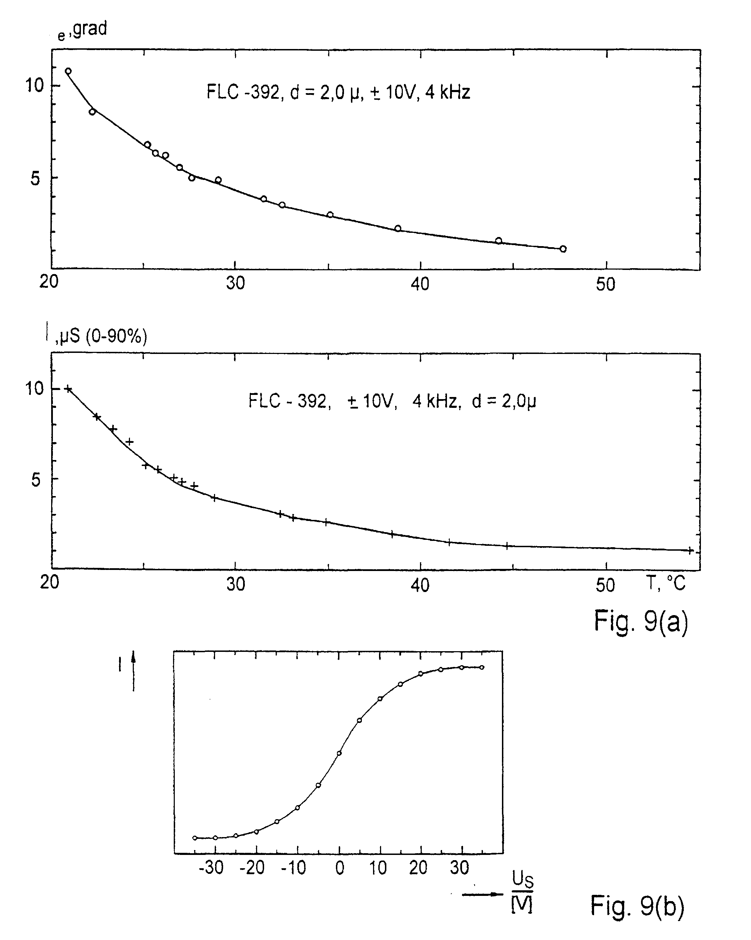

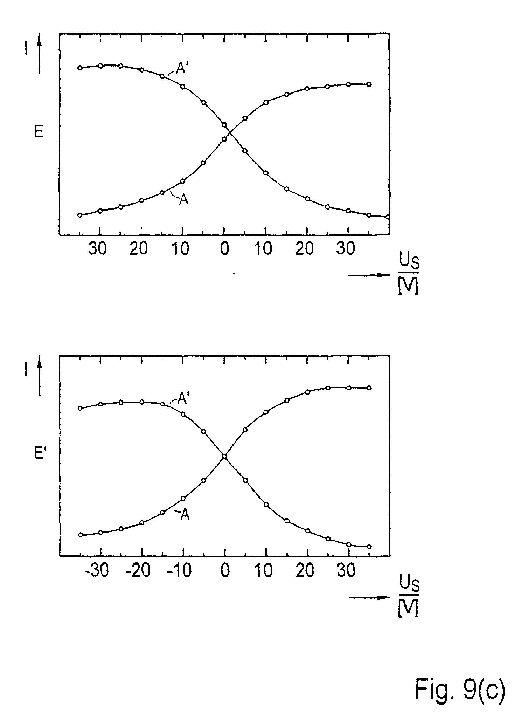

- Fig. 9: (a) die Schaltzeit und den Neigewinkel eines elektroklinen Materials als Funktion der Temperatur,
- Fig. 9: (b) die Modulationstiefe einer Anordnung für einen Kanal als Funktion der Steuerspannung und
- Fig. 9: (c) die Modulationstiefe einer Anordnung für zwei Kanäle als Funktion der Steuerspannung.

Die Figuren 4(a), (b), (d), (e), 7 und 8 stellen keine Ausführungsbeispiele dar, sondern zeigen Anordnungen, die nicht beansprucht werden.

Gleiche Teile sind in den Figuren mit gleichen Bezugszeichen versehen. In den Figuren sind die Lichtbündel als Geraden dargestellt mit in Längsrichtung weisenden Pfeilen, welche die Ausbreitungsrichtung des jeweiligen Lichtbündels anzeigen. Doppelpfeile quer zur Längsrichtung bedeuten eine Polarisation in der Zeichenebene (p), während Kreise mit einem Punkt eine Polarisation senkrecht zur Zeichenebene (s) darstellen.

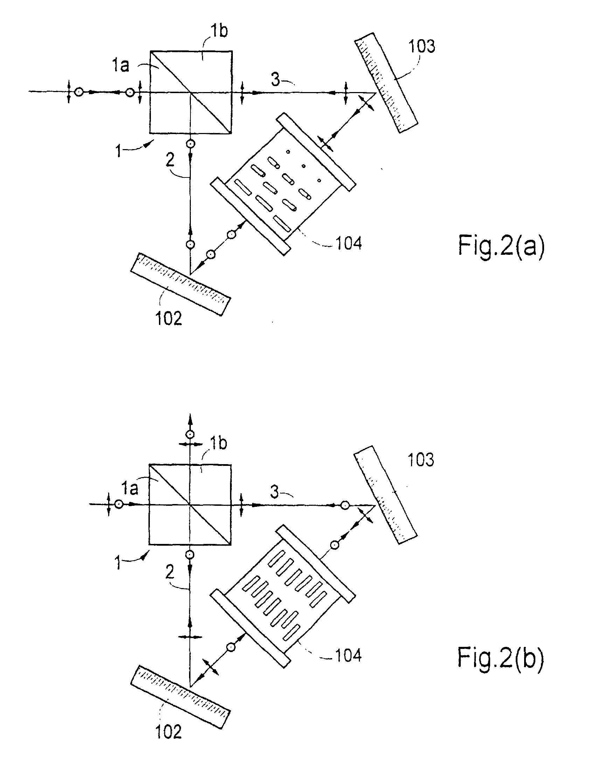

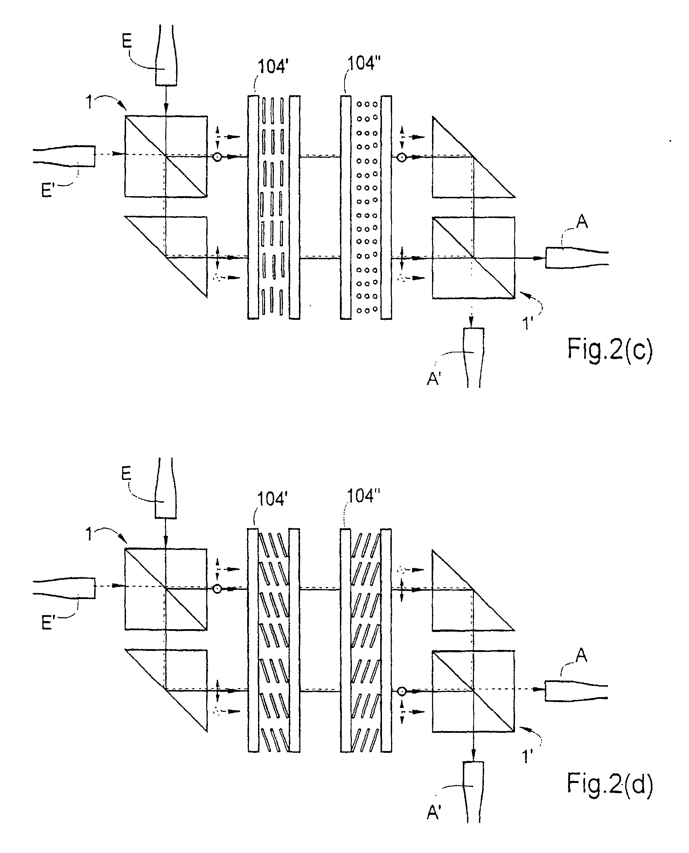

Fig. 2 stellt einen bekannten elektro-optischen Schalter in einer geschlossenen Stellung (Fig. 2(a) und (c)) und in einer offenen Stellung (Fig. 2(b) und (d)) dar.

In den Figuren 2(a) und (b) wird das zu schaltende unpolarisierte Lichtbündel über eine Eintrittsfläche 1a einem polarisierenden Strahlenteiler 1 zugeführt. Der Strahlenteiler 1 schaltet das unpolarisierte kollimierte Licht an der Eintrittsfläche in seine polarisierten Komponenten s und p, die als Lichtbündel 2, 3 den polarisierenden Strahlenteiler wieder verlassen. Über je einen Spiegel 102, 103 werden die polarisierten Lichtbündel 2, 3 in Richtung auf eine TN-Flüssigkristallzelle 104 geleitet. Die reflektierten Lichtbündel durchlaufen die Flüssigkristallzelle 104 in entgegengesetzter Richtung und werden von dem jeweils anderen Spiegel 103, 102 wieder zum polarisierenden Strahlenteiler reflektiert.

Ist keine Spannung an die Elektroden der Flüssigkristallzelle angelegt, so dreht diese die Polarisationsebene der Lichtbündel jeweils um 90°. Dieser Fall ist in Fig. 2(a) dargestellt. Das Lichtbündel 2, das zunächst senkrecht zur Zeichenebene polarisiert ist, erhält damit eine Polarisation in der Zeichenebene und wird damit über den Spiegel 103 zum polarisierenden Strahlenteiler geleitet. Wegen dieser Polarisation wird dieses Strahlenbündel im Strahlenteiler nicht reflektiert, sondern in Richtung auf den Eintrittsstrahl gerade hindurchgelassen.

Licht, das zunächst in der Zeichenebene polarisiert ist, wird senkrecht zur Zeichenebene gedreht und gelangt über den Spiegel 103 zum Strahlenteiler 1, wo es in Richtung auf das zugeführte Lichtbündel reflektiert wird. An einer Austrittsfläche 1b tritt kein Licht aus.

Bei dem in Fig. 2(b) dargestellten Fall ist die Flüssigkristallzelle 104 mit Spannung.beaufschlagt und dreht die Polarisationsebene nicht. Damit gelangen die polarisierten Lichtbündel 2, 3 jeweils mit einer gegenüber dem Pfeil nach Fig. 2(a) gedrehten Polarisation zum Strahlenteiler 1. Dort wird das zurückkehrende Lichtbündel 2 reflektiert und das zurückkehrende Lichtbündel 3 nicht reflektiert, so daß beide Lichtbündel aus der Austrittsfläche 1b austreten.

Die Figuren 2(c) und (d) zeigen einen nach einem ähnlichen Prinzip arbeitenden elektro-optischen Schalter, der Licht, das aus verschiedenen Kanälen E, E' auf den Strahlenteiler 1 trifft, an verschiedene Ausgänge A, A' weiterleitet. Da der Neigewinkel der verwendeten Flüssigkristallzellen 104', 104'' bei hohen Schaltfrequenzen begrenzt ist, sind mehrere Zellen notwendig, um eine vollständige Drehung der Polarisationsebenen der Lichtbündel zu ermöglichen. In der geschlossenen Stellung nach Fig. 2(c) wird das Lichtbündel des Kanals E über einen zweiten Strahlenteiler 1' zum Kanal A weitergeleitet. Das Licht von Kanal E' gelangt zum Kanal A. In der geöffneten Stellung nach Fig. 2(d) werden die Lichtbündel dagegen über Kreuz geschaltet, so daß die Kanäle E und A', sowie E' und A miteinander verbunden sind.

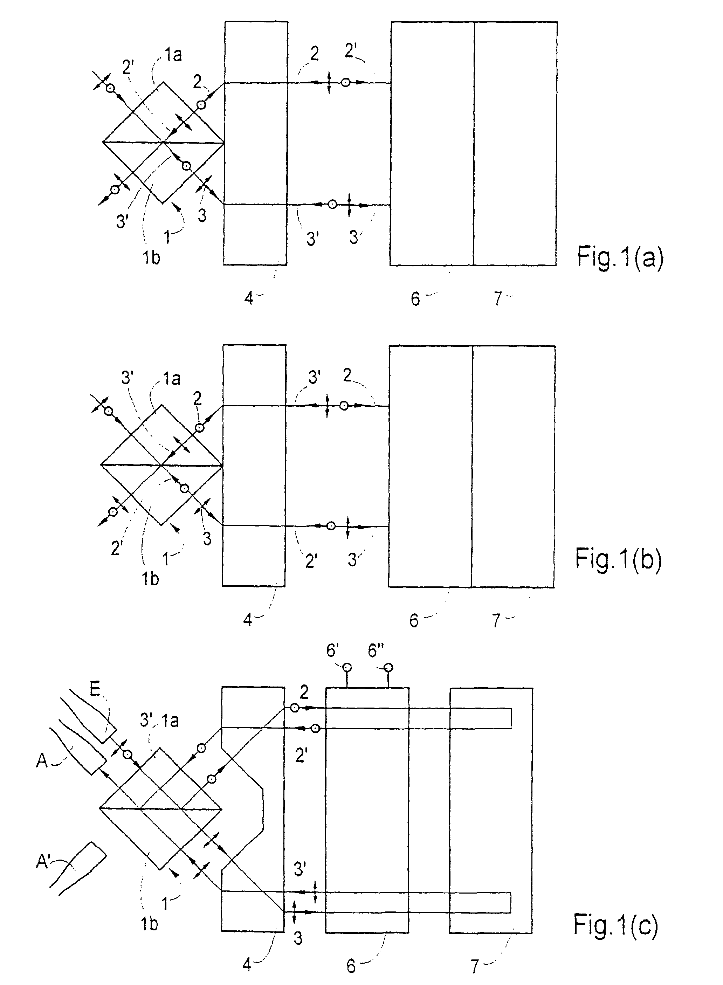

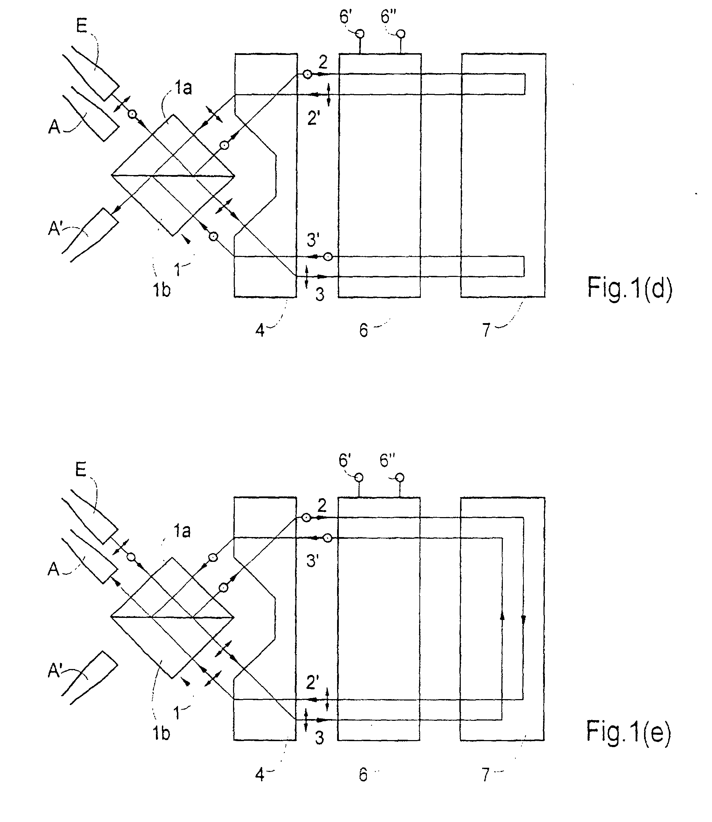

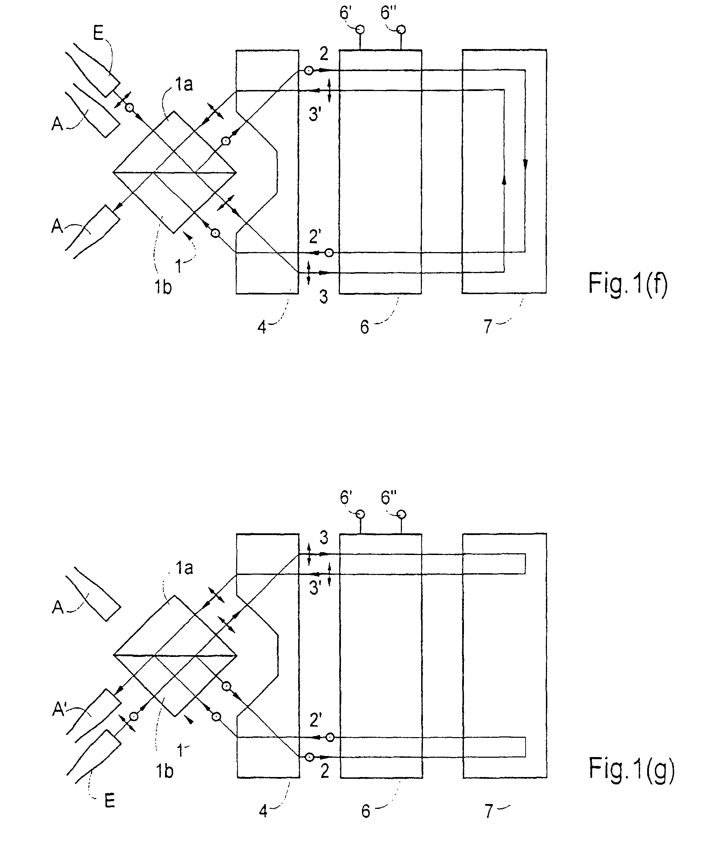

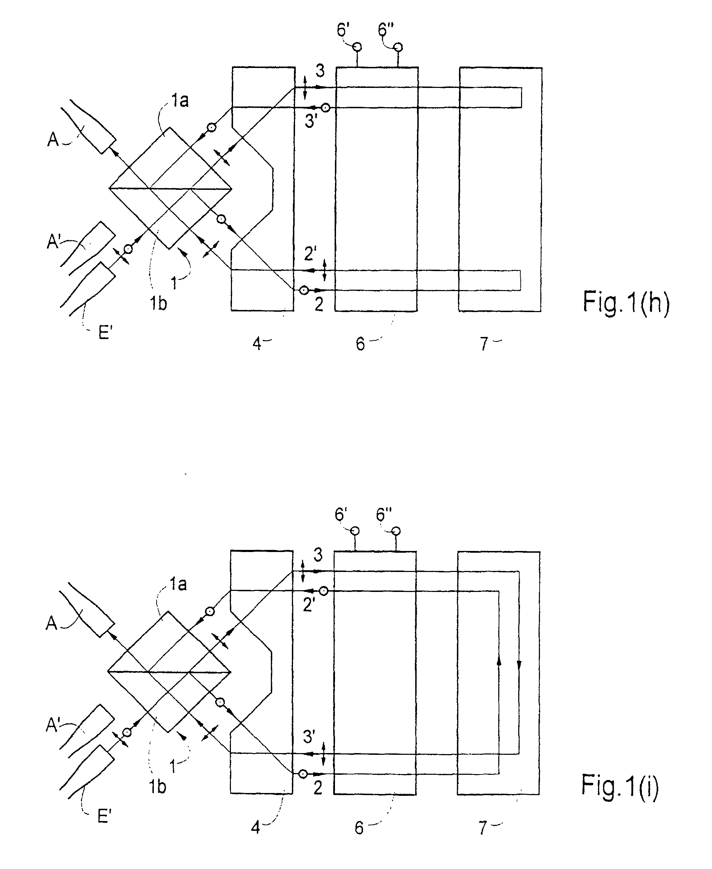

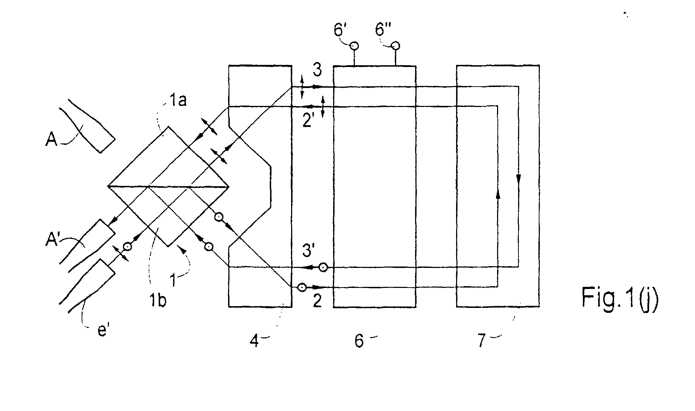

Die Figuren 1(a) und (b) zeigen zwei Varianten eines ersten Ausführungsbeispiels, bei dem das zu steuernde Lichtbündel über die Eintrittsfläche 1a des polarisierenden Strahlenteilers 1 zugeführt wird und zunächst wie bei der bekannten Anordnung nach den Figuren 2(a) und (b) in zwei polarisierte Lichtbündel 2 und 3 aufgespalten wird. In einer ersten reflektierenden Einrichtung 4 werden die polarisierten Lichtbündel 2, 3 dann derart umgelenkt, daß sie parallel verlaufen. Von dort gelangen sie zu einer Einrichtung 5, die ein elektro-optisches Element 6 enthält, das die Polarisation in Abhängigkeit von einer zugeführten Steuerspannung dreht. Eine zweite reflektierende Einrichtung ist in den Figuren 1(a) und (b) verschieden ausgebildet, nämlich derart, daß im Falle von Fig. 1(a) jedes der parallel verlaufenden polarisierten Lichtbündel 2, 3 in sich selbst zurückgespiegelt wird, während im Falle von Fig. 1(b) das Lichtbündel 2 als Lichtbündel 2' entgegengesetzt zum Lichtbündel 3 und das Lichtbündel 3 entgegengesetzt zum Lichtbündel 2 als Lichtbündel 3' reflektiert wird. Beide Varianten sind im Ein-Zustand dargestellt.

Die Figuren 1(c) bis (j) zeigen die gleiche Anordnung als Umschalter von jeweils einem Eingangskanal E oder E' an zwei Ausgangskanäle A, A' in unterschiedlichen Schaltzuständen und mit unterschiedlichen Ausbildungen der schematisch dargestellten zweiten reflektierenden Einrichtung 7. Das Lichtbündel wird hierbei etwas aus dem Zentrum des Strahlenteilers 1 versetzt eingeleitet, so daß der Strahlengang nicht mehr symmetrisch verläuft und die gesteuerten Lichtbündel 2' und 3' je nach Polarisationsrichtung von dem Strahlenteiler 1 an den einen Ausgang A oder an den anderen Ausgang A' geleitet werden. Die Lenkung des Strahlengangs in den reflektierenden Einrichtungen 4, 7 ist auf unterschiedlichste Art und Weise realisierbar; je nach konkreter Anforderug wird der Fachmann die geeigneten Mittel dafür auswählen. In den Figuren 5 und 6 werden Beispiele gegeben. Das elektro-optische Element 6 wird in den Beispielen über Anschlüsse 6' und 6'' mit einer Steuerspannung beaufschlagt.

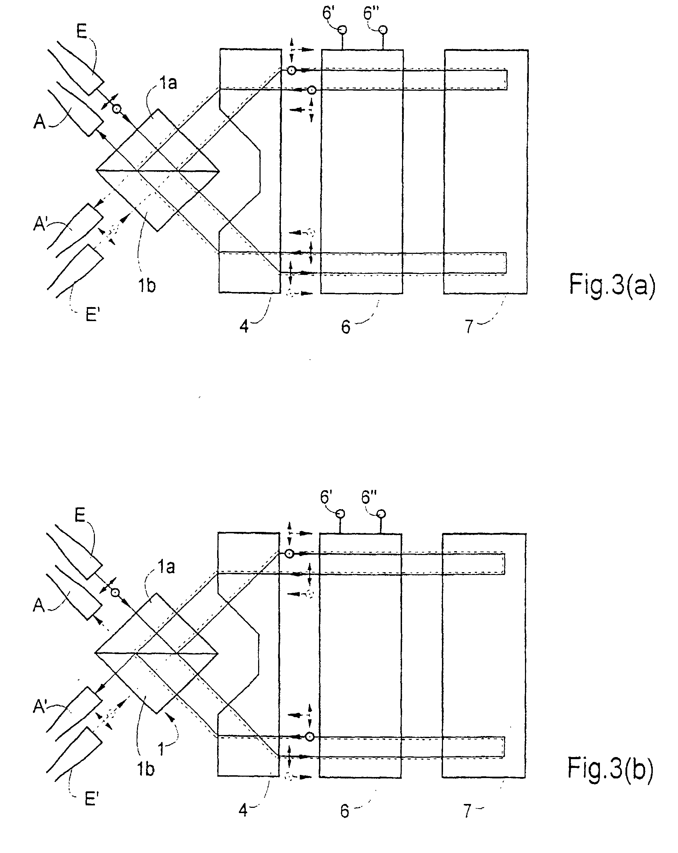

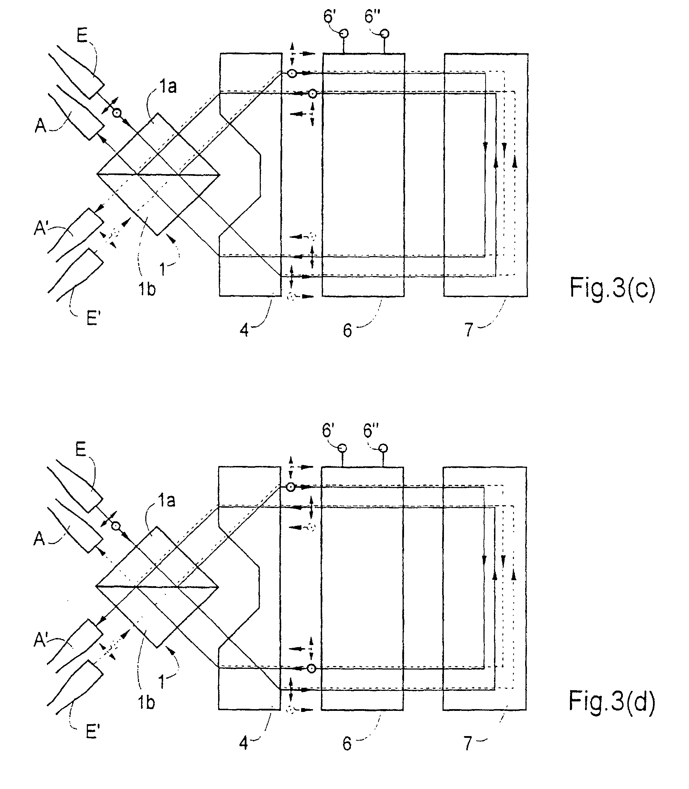

Ein weiterer Anwendungsfall für die erfindungsgemäßen Anordnungen gemäß den Figuren 1(c) bis (j) ist in den Figuren 3(a) bis (d) in zwei Ausbildungsformen in je zwei Schaltzuständen dargestellt. Die Anordnung wird als Kreuzschalter zwischen vier Kanälen benutzt. Je nach Schaltzustand wird jeder Eingang E, E' mit jeweils einem Ausgang A, A' verbunden.

In Fig. 4(a) ist das elektro-optische Element 6 etwas detaillierter als eine Flüssigkristallzelle 8 dargestellt mit einem Flüssigkristall 9 zwischen transparenten Elektroden 9', 9" und einem Pfeil 8', der die langsame Achse kennzeichnet. Demgegenüber enthält die Anordnung gemäß Fig. 4(b) zusätzlich eine Verzögerungsplatte 10.

Bei dem in Fig. 4(c) dargestellten Ausführungsbeispiel ist eine weitere Flüssigkristallzelle 11 mit einem Flüssigkristall 12 und durchsichtigen Elektroden 12' und 12" vorgesehen. Durch die Hintereinanderschaltung zweier Flüssigkristallzellen 8, 11 wird gegenüber den Beispielen nach den Figuren 4(a) und 4(b) lediglich die halbe Drehung zur Erreichung des gleichen Intensitätsunterschiedes beim gesteuerten Lichtbündel benötigt. Wie später noch im einzelnen ausgeführt wird, genügt unter bestimmten Voraussetzungen ein Winkel von ±5,625° zur vollständigen Durchsteuerung.

Die Figuren 4(d) bis (e) zeigen Anordnungen als Kreuzumschalter. Fig. 4(f) stellt ein Ausführungsbeispiel als Kreuzumschalter dar.

Die Figuren 5(a) bis (h) zeigen Ausführungsbeispiele mit verschiedenen Varianten der ersten reflektierenden Einrichtung 4, die in Fig. 5(a) als Spiegel ausgeführt ist. Bei dem Ausführungsbeispiel nach Fig. 5(b) werden zur Umlenkung der polarisierten Lichtbündel in parallele Richtungen zwei Spiegel 14, 15 verwendet. Bei dem Ausführungsbeispiel nach Fig. 5(c) erfolgt eine Umlenkung des einen polarisierten Lichtbündels 3 in die Richtung des anderen Lichtbündels 2 mit Hilfe eines Prismas 16, während dazu beim Ausführungsbeispiel nach Fig. 5(d) zwei Prismen 17, 18 verwendet werden. Diese Prismen sind bei dem Ausführungsbeispiel nach Fig. 5(e) jeweils mit einem Teilprisma des polarisierenden Strahlenteilers zu einem Körper vereinigt. Dies hat den Vorteil, daß an den ansonsten vorhandenen Grenzflächen zwischen dem Strahlenteiler 1 und den Prismen 17, 18 keine Verluste durch Reflexionen auftreten können. Außerdem wird bei dem Ausführungsbeispiel nach Fig. 5(e) Montageaufwand gespart.

Bei den Ausführungsbeispielen nach den Figuren 5(f) bis (h), welche jeweils drei Ansichten zeigen, liegen das zugeführte Lichtbündel sowie das gesteuerte Lichtbündel jeweils in einer Ebene parallel zur Flüssigkristallzelle 6 und zur zweiten reflektierenden Einrichtung 7. Die beiden aus dem polarisierten Strahlenteiler austretenden polarisierten Lichtbündel werden mit Hilfe von Spiegeln 19, 20 in Richtung auf das elektro-optische Element 6 umgelenkt (Fig. 5(f)). Dieses erfolgt bei dem Ausführungsbeispiel nach Fig. 5(g) mit Hilfe von zwei Prismen 21, 22. In Fig. 5(g) ist ferner zur Flüssigkristallzelle 6, welche in dem Fall einen ferro-elektrischen Flüssigkristall enthält, der Drehwinkel von 22,5° zwischen negativer und positiver Spannung dargestellt. Bei dem Ausführungsbeispiel nach Fig. 5(h) werden zum Umlenken bei dem polarisierten Lichtbündel 2, 3 Pentaprismen 23, 24 verwendet.

Die Figuren 5(i) bis (n) zeigen jeweils die Strahlengänge der gleichen Anordnungen, wenn sie mit jeweils zwei Eingängen E, E' und zwei Ausgängen A, A' beaufschlagt werden. In dieser Konfiguration sind die Anordnungen wieder als Umschalter zu benutzen.

Die Figuren 6(a) bis (g) zeigen Ausführungsbeispiele für die zweite reflektierende Einrichtung 7, während die erste reflektierende Einrichtung 4 und das elektro-optische Element 6 nicht näher ausgeführt sind. Fig. 6(a) stellt als zweite reflektierende Einrichtung einen Spiegel 25 dar, während die zweite reflektierende Einrichtung bei Fig. 6(b) von einem hohlen Tripel-Spiegel 26 gebildet wird, der aus drei ebenen Spiegeln 27, 28, 29 besteht.

Das Ausführungsbeispiel nach Fig. 6(c) umfaßt zwei solche Tripel-Spiegel 30, 31, die aus jeweils drei ebenen Spiegeln 32, 33, 34 bzw. 35, 36, 37 bestehen. In Fig. 6(c) ist außerdem angedeutet, daß es bei der erfindungsgemäßen Anordnung nicht unbedingt erforderlich ist, die parallelen polarisierten Lichtbündel in sich selbst oder in dem jeweils anderen Lichtbündel zu reflektieren.

Das Ausführungsbeispiel nach Fig. 6(d) enthält einen massiven Tripel-Spiegel als zweite reflektierende Einrichtung, das Ausführungsbeispiel nach Fig. 6(e) zwei massive Tripel-Spiegel 39, 40.

Das Ausführungsbeispiel nach Fig. 6(d) enthält ein Pyramidenprisma als zweite reflektierende Einrichtung; das Ausführungsbeispiel nach Fig. 6(e) zwei Pyramidenprismen 39, 40.

Fig. 6(f) zeigt zwei Spiegel 41, 42, die einen Winkel von 90° einschließen und die parallelen polarisierten Lichtbündel in das jeweils andere reflektieren. Bei dem Ausführungsbeispiel nach Fig. 6(g) sind zwei Paar Spiegel 43, 44 vorgesehen, die aus jeweils zwei Einzelspiegeln 45, 46 bzw. 47, 48 bestehen.

Fig. 6(h) zeigt ein Beispiel für Maßnahmen, um gleiche optische Weglängen für die polarisierten Lichtbündel 2, 2', 3, 3' zu erhalten. Die zusätzliche Weglänge 49 des Lichtbündels 3, 3' wird dadurch ausgeglichen, daß das Spiegelpaar 44 näher an dem elektro-optischen Element 6 angeordnet ist als das Spiegelpaar 43. Der Abstand 50 entspricht genau der Weglängendifferenz 49.

Die optischen Weglängen beider Lichtbündel sind bei dem Ausführungsbeispiel nach Fig. 6(i) wegen des symmetrischen Aufbaus gleich. Als zweite reflektierende Einrichtung wird ein 90°-Prisma 51 verwendet. Bei ansonst gleichem Aufbau umfaßt das Ausführungsbeispiel nach Fig. 6(j) zwei 90°-Prismen 52, 53 als zweite reflektierende Einrichtung.

Das Ausführungsbeispiel nach Fig. 6(k) enthält als erste reflektierende Einrichtung ein Prisma 16, wobei sich wiederum eine Weglängendifferenz 54 zwischen den beiden polarisierten Lichtbündeln ergibt. Diese wird durch einen Versatz 55 der als zweite reflektierende Einrichtung dienenden Prismen 52, 53 ausgeglichen.

Im Falle der Anordnung nach Fig. 6(1) sind als zweite reflektierende Einrichtung zwei Pentaprismen 56, 57 vorgesehen bei symmetrischen Aufbau der gesamten Anordnung. Dabei kann die in Fig. 6(1) lediglich schematisch dargestellte erste reflektierende Einrichtung 4 beispielsweise von zwei Spiegeln und Prismen gebildet werden entsprechend den Ausführungsbeispielen nach den Figuren 5(b), (d) oder (e).

Bei dem Ausführungsbeispiel nach Fig. 6(m) sind als zweite reflektierende Einrichtung 7 zwei Dachkantprismen 58, 59 vorgesehen, die der Anschaulichkeit halber ein zweites Mal in einer anderen Ansicht dargestellt sind. Das Ausführungsbeispiel nach Fig. 6(n) enthält zwei Dachkantspiegelsysteme 60, 61, die jeweils aus zwei Einzelspiegeln 62, 63 bzw. 64, 65 bestehen.

Die entsprechenden Verwendungsformen als Umschalter finden sich in den Figuren 6(o) bis (za), wobei in den Figuren 6(p) und (r) die Besonderheit auftritt, daß die Spiegel 66, 67 bzw. das Prisma 68 vertikal angeordnet sind und dadurch einen seitlichen Versatz der Lichtbündel bewirken. Dies kann Vorteile bei der räumlichen Anordnung der Vorrichtung in einer konkreten Anwendung mit sich bringen.

Fig. 7(a) zeigt eine dreidimensionale Darstellung einer Anordnung in Form einer Explosionszeichnung. Als erste reflektierende Einrichtung dient ein Prisma 16 als zweite ein Spiegel 25. Der Winkel α ist der Winkel zwischen der langsamen Achse 8' des Flüssigkristalls 9 und der s-Polarisation des Bündels 2. Der Winkel β ist der Winkel zwischen der schnellen Achse 10' der Verzögerungsplatte 10 (auf einer Lambda/4-Platte) und der s-Polarisation des Lichtbündels 2.

Bei der ansonsten entsprechend Fig. 7(a) aufgebauten Anordnung nach Fig. 7(b) ist als zweite reflektierende Einrichtung ein Tripel-Spiegel 38 vorgesehen. Dadurch werden die reflektierten parallel verlaufenden polarisierten Lichtbündel gegenüber den nicht reflektierten vertauscht, so daß sich insgesamt für beide Lichtbündel der gleiche optische Weg ergibt. Dieses gilt auch für das Beispiel nach Fig. 7(c), bei welchem als zweite reflektierende Einrichtung ein 90°-Prisma 51 angeordnet ist.

Fig. 7(d) zeigt die Anordnung nach Fig. 7(c) für den Verwendungsfall als Umschalter.

Die Figuren 8(a) und (b) zeigen eine Anordnung mit einem 90°-Prisma 16 als erste reflektierende Einrichtung, einer Flüssigkristallzelle und einer Lambda/4-Platte 10 als elektro-optisches Element 6. Ferner ist ein 90°-Prisma 51 als zweite reflektierende Einrichtung vorgesehen. Fig. 8(a) stellt die Anordnung im Aus-Zustand bzw. geschlossen dar, während Fig. 8(b) die Einrichtung im Ein-Zustand bzw. offen zeigt.

Die Anordnung nach den Figuren 8(a) und (b) enthält eine nematische Flüssigkristallzelle mit positiver dielektrischer Anisotropie. n ist der nematische Direktor, der der schaltbaren optischen Achse 8' entspricht. Die Lichtbündel 2" und 3" haben bei diesem Winkel eine Polarisation von 45° bzw. -45°. In der Lambda/4-Platte 10 wird diese lineare Polarisation in eine rechts- bzw. linksdrehende Zirkular-Polarisation umgewandelt, die nach der Reflexion im Prisma 51 einen anderen Drehsinn erhält.

Bei dem nochmaligen Durchtritt durch die Lambda/4-Platte 10 entsteht wieder eine lineare Polarisation im Falle des Lichtbündels 2''' von -45°, im Falle des Lichtbündels 3''' von +45°. Diese Polarisation wird bei dem nochmaligen Durchlaufen der Flüssigkristallzelle um 45° gedreht, so daß das Lichtbündel 2' in der Zeichenebene polarisiert ist, während das Lichtbündel 3' senkrecht zur Zeichenebene polarisiert ist. In dieser Polarisation wird das Lichtbündel 2" gerade durch den polarisierenden Strahlenteiler 1 hindurchgelassen, während das Lichtbündel 3" nach der Umlenkung im Prisma 16 im polarisierenden Strahlenteiler 1 reflektiert wird und durch die Eintrittsfläche 1a austritt. Damit tritt kein Licht durch die Austrittsfläche 1b auf, so daß im beschriebenen spannungslosen Fall gemäß Fig. 8(a) der Schalter geschlossen ist. Durch entsprechende Weiterleitung des Lichtes auch von der Eintrittsfläche 1a bzw. entsprechende Anordnung von Sensoren kann die Anordnung nach den Figuren 8(a) und (b) auch als Umschalter oder im Falle eines allmählichen Überganges als Überblender verwendet werden.

Bei dem in Fig. 8(b) dargestellten Fall ist die Flüssigkristallzelle 8 mit einer Spannung beaufschlagt, so daß der nematische Flüssigkristall in den homeotropen Zustand überführt ist. Das unpolarisierte Licht an der Eintrittsfläche 1a wird zur Austrittsfläche 1b übertragen. Der Direktor 8' des nematischen Flüssigkristalls 9 steht senkrecht zur Fläche der Elektroden.

Die Figuren 8(c) und (d) zeigen eine Anordnung mit einer ferro-elektrischen Flüssigkristallzelle 8 mit einer Dicke der Flüssigkristallschicht, die einen optischen Gangunterschied von (3/8)lambda im Sperrzustand gemäß Fig. 8(c) bewirkt. Das Prisma 16 wird als erste reflektierende Einrichtung verwendet, ein 90°-Prisma 51 als zweite reflektierende Einrichtung. Zum Schalten vom Aus-Zustand in den Ein-Zustand wird die Spannung an den Elektroden 9', 9" umgepolt. Im Aus-Zustand (closed) sind die aus der Flüssigkristallzelle 8 austretenden Lichtbündel 2" und 3" elliptisch polarisiert. Durch die Reflexion im Prisma 51 werden der Drehsinn und der Winkel der Achsen der Ellipse geändert. Beim Aus-Zustand gemäß Fig. 8(d) erfolgt keine Drehung der Polarisation durch die Flüssigkristallzelle 8.

Die Anordnung gemäß den Figuren 8(e) und (f) enthält eine ferro-elektrische Flüssigkristallzelle, deren Flüssigkristallschicht 9 eine derartige Dicke d aufweist, daß der optische Gangunterschied lambda/2 beträgt. Außerdem wird eine Lambda/4-Platte 10 benutzt. Im Durchlaßzustand gemäß Fig. 8(e) ist die langsame Achse 8' wie die Polarisationsebene des Lichtbündels 3 ausgerichtet. Im Sperrzustand gemäß Fig. 8(f) ist die langsame Achse 8' um 22,5° von der Polarisationsebene des Lichtbündels 3 versetzt. Das Prisma 16 und das Prisma 51 werden wie bei dem Ausführungsbeispiel nach den Fig. 8(c) und (d) als erste und zweite reflektierende Einrichtung eingesetzt.

Die Figuren 8(g) bis (j) zeigen den Strahlengang der oben beschriebenen Anordnungen bei der Verwendung als Umschalter.

Fig. 9(a) zeigt die Temperaturabhängigkeit des induzierten Neigewinkels ±θ und der durchschnittlichen Schaltzeit tau für das elektrokline Material FLC-392. Die Dicke der Flüssigkristallzelle beträgt 1,6 µm, die Steuerspannung ±10V. Fig. 9(b) gibt die Modulationstiefe einer Anordnung nach den Figuren 7(c) und 8(e/f) in Abhängigkeit von der Steuerspannung V wieder. Der Messung liegt eine Flüssigkristallzelle mit einem elektroklinen Flüssigkristall und einer Lambda/4-Platte zugrunde.

Die Fig 9(c) zeigt die Intensität I des an den Ausgängen A, A' ankommenden gesteuerten Lichts als Funktion der Steuerspannung U_{S}. Die Kurben wurden mit einer Anordnung nach Fig. 7(d) aufgenommen Im oberen Diagramm kommt das Licht vom Eingang E und im unteren Diagramm von Eingang E'. Man sieht, daß ein vollständiges Umschalten zwischen den Ausgängen A und A' mit der hier verwendeten Flüssigkristallzelle FLC-392 bei einer Spannunsdifferenz von etwa 60 Volt erfolgt.

Durch die Art des Flüssigkristalls und dessen Ansteuerung, durch die Dicke des Flüssigkristalls, durch die Anordnung einer Verzögerungsplatte und weiterer optischer Voraussetzungen bei einer erfindungsgemäßen Anordnung ergeben sich sehr viele verschiedene Kombinationsmöglichkeiten. Einige davon sind im folgenden beschrieben.

Wird beispielsweise im nematischen Flüssigkristall die Umwandlung von planar auf homeotop vorgenommen, so ist eine Nutzung für binäre Schaltvorgänge (ein/aus) gegeben. Für diesen Fall fällt die Orientierung der langsamen Achse 8' mit dem Direktor der langen molekularen Achse zusammen. Sie soll unter 45° zu den Polarisationsrichtungen des polarisierenden Strahlenteilers stehen. Dabei soll die Dicke d der Flüssigkristallschicht die Bedingung δn·d = lambda/4+N·lambda erfüllen, wobei N = 0, ±1, ±2, ±3 ... ist. Dabei ist δn die Doppelbrechung der Schicht (δn = n_{L}-n_{S}), wobei n_{L} der Brechungsindex des Flüssigkristalls in der langsamen Achse und n_{S} in der schnellen Achse ist. Ohne elektrisches Feld ist der Schalter im Aus-Zustand. Mit elektrischem Feld wird der Flüssigkristall homeotrop und das Licht tritt an der Fläche 1b aus (Ein-Zustand). Beispiele für solche Anordnungen zeigen die Figuren 6(b) bis (e) und 7(b).

Bei den Bauformen nach den Figuren 6(f) bis (n) sind die Eigenschaften des Flüssigkristalls anders als in den vorhergehenden Feldern. Zum einen ist die Dicke d der Flüssigkristallzelle derart, daß sich eine Verzögerung δn·d = (3/8)lambda+N·lambda ergibt. Außerdem wird der Direktor der Schicht von 22,5° auf -22,5° im elektrischen Feld bezüglich der p-Polarisationsebene umgeschaltet. Ohne elektrisches Feld ist die Anordnung ausgeschaltet. Mit elektrischem Feld tritt eine homeotrope Orientierung ein, die Anordnung ist eingeschaltet.

Flüssigkristallzellen unter Verwendung des S-Effektes in nematischen Flüssigkristallen können für Schalter hoher Apertur und mit Schaltzeiten in der Größenordnung von ms, das heißt, in einem Frequenzbereich von 0 Hz bis 100 Hz, vorzugsweise mit einer Lambda/4-Platte, eingesetzt werden.

Der SSFLC-Effekt (surface stabilized ferroelectric liquid crystals) kann für zwei verschiedene Neigewinkel in chiralen smektischen und ferro-elektrischen Phasen des Flüssigkristalls eingesetzt werden. Das FLC-Material kann mit dem Neigewinkel 22,5° in den Ausführungsformen nach den Figuren 6(a) bis (e) ohne Verzögerungsplatte eingesetzt werden. Die Dicke d des Flüssigkristalls soll für beide Polaritäten der angelegten Spannung die Bedignung δn·d = lambda/4+N·lambda erfüllen. Die Orientierung der Normalen der smektischen Lagen (Reibrichtung) soll einen Winkel von +22,5° oder -22,5° mit der Polarisationsrichtung des s- bzw. des p-Lichtbündels 2, 3 einschließen. Für die eine Feldpolung tritt aus der Austrittsfläche Licht aus, für die andere Feldpolung nicht. Für das Ausführungsbeispiel in der Figur 6(a) und das Beispiel in Abbildung 7(a) hat die Polarität ein umgekehrtes Vorzeichen im Vergleich zu den Figuren 6(b) bis (e) und 7(b). Für die Ausführungsbeispiele nach den Figuren 6(f) bis (n) und den Anordnungen nach den Figuren 7(c), 8(c/d) und 8(e/f) sind die optischen Eigenschaften des Flüssigkristalls anders als im vorher beschriebenen Fall. Die FLC-Lagen sollen eine Verzögerung von (3/8)lambda+N·lambda haben. Der Wert des Schaltwinkels beträgt nur 11,25°. Die Normale zur smektischen Lage des FLC-Materials soll den Winkel +11,25° oder -11,25° oder +33,75° oder -33,75° zur p-Polarisationsrichtung des Lichtbündels 3 haben. Derartige Anordnungen können für Schaltzeiten zwischen 10 µs und 20 µs und Spannung zwischen 20V und 30V verwendet werden.

Der elektrokline Effekt und der DHF-Effekt (deformed helix ferroelectrics) werden in erfindungsgemäßen Anordnungen zur optischen Modulation mit Zwischenwerten eingesetzt. Für die Ausführungsbeispiele nach den Figuren 6(a) bis (e), und die Anordnungen nach Abbildungen 7(a) und 7(b) soll die Orientierung der Normalen der smektischen Lagen einen Winkel von +45° oder -45° mit der s- bzw. der p-Polarisationsebene bilden. Die Dicke der Flüssigkristallschicht soll die Verzögerung lambda/4+N·lambda erlauben. Die von der Fläche 1a zur Fläche 1b des polarisierenden Strahlenteilers durchgelassene Lichtintensität variiert kontinuierlich von 0% bis 100%, wenn der elektrisch induzierte Neigewinkel der langsamen Achse der Indikatrix zwischen 0° und 45° variiert. Für den Fall, daß der DHF-Effekt verwendet wird, beträgt die notwendige Achskippung ±22,5°, was mit wenigen Volt Steuerspannung erreicht werden kann. Die Schaltzeit beträgt dabei etwa 100 µs. Geeignete Flüssigkristallzellen sind beispielsweise beschrieben in: L.A. Beresnev et al: "Deformed helical ferroelectric liquid crystal display: a new electro-optical mode in ferroelectric liquid crystals", Liquid Crystals Vol. 5, p. 1171-1179 (1989) und in L.A. Beresnev et al: "Ferro-elektrische Flüssigkristallanzeige", Schweizerisches Patent 3722/87.

In den Ausführungsbeispielen gemäß den Figuren 6(f) bis (n), und den Anordnungen in Abbildungen 7(c), 8(c/d) und 8(e/f) beträgt der Neigewinkel der langsamen Achse 8' im elektrischen Feld nur 11,25°. Dazu wird sehr schnelles elektroklines Material mit Schaltzeiten von wenigen µs verwendet, wie es beispielsweise durch US-Patent 4,838,663 bekanntgeworden ist. Diese Anordnungen erlauben eine kontinuierliche Modulation von unpolarisiertem Licht zwischen 0% und 100% bei einer Steuerspannung im Bereich von ±30 V.

Eine Weitere Anordnung umfaßt eine ferro-elektrische Flüssigkristallzelle und eine Lambda/4-Platte, die in den Figuren 4(b), 7(a) bis (c), 8(c/d) und 8(e/f) dargestellt ist. Dabei gibt es eine Fülle von Möglichkeiten, die Orientierung der langsamen Achse 8' der Flüssigkristallschicht 8 und der schnellen Achse 10' der Verzögerungsplatte 10 um den Aus- und den Ein-Zustand der Anordnung zu verwirklichen. Dies ist in Fig. 8(e/f) dargestellt.

Beim Ein-Zustand sind die Polarisationsrichtungen der Lichtbündel 2, 3 parallel bzw. senkrecht zur langsamen Achse des Flüssigkristalls und der Verzögerungsplatte 10 orientiert. Dadurch wird das Licht weder in der Flüssigkristallzelle noch in der Verzögerungsplatte in seinem Polarisationszustand verändert. Die zweite reflektierende Einrichtung 7 verändert den Polarisationszustand ebenfalls nicht, so daß das Licht beider Polarisationsrichtungen ungehindert die Austrittsfläche 1b des polarisierenden Strahlenteilers 1 erreicht.

Im Aus-Zustand kippt der Direktor (Indikatrix-Orientierung) des Flüssigkristalls 9 durch die Wirkung des elektrischen Feldes um 22,5°. Da die Verzögerung im Flüssigkristall gleich lambda/2 ist, dreht die Flüssigkristallzelle die Polarisationsrichtung um 2·22,5° = 45°. Nach der Lambda/4-Platte 10 erhält man zirkular polarisiertes Licht, das durch die zweite reflektierende Einrichtung 7 zirkular polarisiert reflektiert wird, wobei der Drehsinn umgekehrt ist. Nach dem zweiten Durchgang durch die Lambda/4-Platte 10 erhält man im Lichtbündel 2'" bzw. 3'" linear polarisiertes Licht, das orthogonal zum Licht der Lichtbündel 2" und 3" nach dem ersten Durchgang durch die Flüssigkristallzelle polarisiert ist (-45°). Diese Lichtbündel werden beim zweiten Durchgang durch die Flüssigkristallzelle um 2·(45°+22,5°) = (90°+45°) gedreht und erreichen somit die jeweils orthogonale Orientierung 2', 3' der Polarisation. Der polarisierende Strahlenteiler 1 führt die Lichtbündel in der Fläche 1b zusammen.

In den Fällen des elektroklinen Effektes und des DHF-Effektes kann die elektrisch kontrollierte Durchlässigkeit der erfindungsgemäßen Anordnung zwischen den Flächen 1a und 1b des polarisierenden Strahlenteilers 1 für unpolarisiertes Licht zwischen den Werten 0% und fast 100% kontinuierlich verändert werden. Als Anwendung kommen schnelle optische Begrenzer oder die schnelle automatische Steuerung von Lichtintensitäten in Frage. Dabei können sich Lichtdetektoren am Ausgang der Anordnung befinden, die durch elektrische Rückkoppelung auf die Elektroden der Flüssigkristallzelle Steuerfunktionen ausüben. Anwendungen sind beispielsweise beschrieben in CH 888 102 583 und EP 0 335 056 sowie in M. Eve et al: "New automatic-gain-control system optical receivers", Electronics Letter 15, p. 146-147 (1979).

Die elektrisch verstellbaren Neigewinkel lassen sich bei der erfindungsgemäßen Anordnung halbieren, wenn zwei Flüssigkristallzellen hintereinander angeordnet werden. Beim elektroklinen Effekt benötigt man dann den extrem kleinen Neigewinkel von ±5,625°, um das Licht bei Schaltzeiten von 1 µs und Arbeitsspannungen von ±10V durchzuschalten. Schnelle elektrokline Flüssigkristallmaterialien mit Schaltzeiten von 1 µs und darunter in niedrigen Arbeitsspannungen bestehen aus Gemischen einer lamellaren Matrix, beispielsweise einer smektischen A- oder C-Phase und chiralen Dotiermolekülen mit einem Neigungswinkel θm und sind beispielsweise aus DE 196 24 769 A1 bekannt. Versuche haben gezeigt, daß sich Zeitkonstanten von 100 ns bei Steuerspannungen von 10V bis 20V bei Zimmertemperaturen erreichen lassen.

Die Fig. 9(c) zeigt die Intensität I des an den Ausgängen A, A' ankommenden gesteuerten Lichts als Funktion der Steuerspannung. Die Kurven wurden mit einer Anordnung nach Fig. 7(d) aufgenommen. Im oberen Diagramm kommt das Licht vom Eingang E und im unteren Diagramm von Eingang E'. Man sieht, daß ein vollständiges Umschalten zwischen den Ausgängen A und A' mit der hier verwendeten Flüssigkristallzelle FLC-392 bei einer Spannungsdifferenz von etwa 60V erfolgt.

## Patentansprüche

1. Anordnung zur elektrischen Steuerung der Intensität von unpolarisiertem Licht mit
- einer elektro-optischen Einrichtung (6),
- einem Strahlenteiler (1) zur Aufteilung zugeführten Lichts in zwei orthogonal zueinander polarisierte Lichtbündel (2, 3),
- einer nachgeschalteten ersten reflektierenden Einrichtung (4) zur Reflexion mindestens eines der polarisierten Lichtbündel, die derart ausgebildet ist, daß die polarisierten Lichtbündel (2, 3) parallel verlaufen und durch die elektro-optische Einrichtung (6) hindurchtreten,
- sowie mindestens einer nachgeschalteten zweiten reflektierenden Einrichtung (7), welche zur Reflexion der Lichtbündel in Gegenrichtung derart angeordnet ist, daß die Lichtbündel ein zweites Mal durch die elektro-optische Einrichtung (6) hindurchtreten und anschließend durch die erste reflektierende Einrichtung (4) und den Strahlenteiler (1) wieder vereinigt und zu mindestens einer Austrittsstelle (16) geführt werden, wo das gesteuerte Licht entnehmbar ist,
**dadurch gekennzeichnet,**
- **daß** die elektro-optische Einrichtung (6) aus zwei oder mehr hintereinander geschalteten, elektrisch steuerbaren Flüssigkristallzellen besteht, welche zwischen Elektroden (9', 9", 12', 12") eingebettet sind und welche die Polarisation hindurchgeführter Lichtbündel (2, 3) in Abhängigkeit der an die Elektroden (9', 9", 12', 12") angelegten Steuerspannung ändern.

2. Anordnung nach Anspruch 1, **dadurch gekennzeichnet, daß** die von dem Strahlenteiler (1) aus gesehen letzte Elektrode (12") der Flüssigkristallzellen (6) unter Bildung der zweiten reflektierenden Einrichtung (7) reflektierend ist.

3. Anordnung nach einem der vorhergehenden Ansprüche, **dadurch gekennzeichnet, daß** die Flüssigkristallzellen (6, 9, 12) durch nematische Flüssigkristalle mit positiver dielektrischer Anisotropie gebildet sind, deren Dicked eine der Bedingungen δn·d = lambda/4+N·lambda, δn·d = 3/8·lambda+N·lambda, δn·d = lambda/2+N·lambda erfüllt, wobei N eine ganze Zahl, δn die Doppelbrechung des Flüssigkristalls und lambda die Wellenlänge des Lichts ist.

4. Anordnung nach einem der Ansprüche 1 oder 2, **dadurch gekennzeichnet, daß** die Flüssigkristallzellen durch ferroelektrische Flüssigkristalle (6, 9, 12), welche zwischen Elektroden (9', 9", 12', 12") eingebettet sind und welche die Polarisation hindurchgeführter Lichtbündel (2, 3) in Abhängigkeit der an die Elektroden (9', 9", 12', 12") angelegten Steuerspannung ändern, gebildet sind.

5. Anordnung nach Anspruch 4, **dadurch gekennzeichnet, daß** die von dem Strahlenteiler (1) aus gesehen letzte Elektrode (12") der Flüssigkristallzellen (6) unter Bildung der zweiten reflektierenden Einrichtung (7) reflektierend ist.

6. Anordnung nach einem der Ansprüche 4 oder 5, **dadurch gekennzeichnet, daß** die Dicked der ferroelektrischen Flüssigkristalle der Flüssigkristallzellen (6, 9, 12) eine der Bedingungen δn·d = lambda/4+N·lambda, δn·d = 3/8·lambda+N·lambda, δn·d = lambda/2+N·lambda erfüllen, wobei N eine ganze Zahl, δn die Doppelbrechung der Flüssigkristalle und lambda die Wellenlänge des Lichts ist.

7. Anordnung nach einem der vorhergehenden Ansprüche, **dadurch gekennzeichnet, daß** im Weg der parallel verlaufenden polarisierten Lichtbündel (2, 3) eine Phasenverzögerungsplatte (10) mit einer optisch wirksamen Dicke von einem Viertel der Wellenlänge des Lichts oder bei breitbandigem Licht der Schwerpunktwellenlänge angeordnet ist.

8. Anordnung nach einem der vorhergehenden Ansprüche, **dadurch gekennzeichnet, daß** die erste reflektierende Einrichtung (4) aus zwei Spiegeln besteht und derart ausgebildet ist, daß die polarisierten Lichtbündel (2, 3) senkrecht zu der Ebene verlaufen, die durch die Achsen des zugeführten und des gesteuerten Lichts aufgespannt wird.

9. Anordnung nach einem der Ansprüche 1 bis 7, **dadurch gekennzeichnet, daß** die erste reflektierende Einrichtung (4) aus zwei 90°-Prismen besteht und derart ausgebildet ist, daß die polarisierten Lichtbündel (2, 3) senkrecht zu der Ebene verlaufen, die durch die Achsen des zugeführten und des gesteuerten Lichts aufgespannt wird.

10. Anordnung nach einem der Ansprüche 1 bis 7, **dadurch gekennzeichnet, daß** die erste reflektierende Einrichtung (4) aus zwei Pentaprismen besteht und derart ausgebildet ist, daß die polarisierten Lichtbündel (2, 3) senkrecht zu der Ebene verlaufen, die durch die Achsen des zugeführten und des gesteuerten Lichts aufgespannt wird.

## Claims

1. Arrangement for electrically controlling the intensity of unpolarized light with
- an electro-optic means (6);
- a beam splitter (1) for splitting supplied light into two light bundles (2, 3) orthogonally polarized with respect to each other;
- a downstream first reflecting means (4) for reflecting at least one of the polarized light bundles, said means (4) being of such design that the polarized light bundles (2, 3) run parallel and pass through the electro-optic means (6);
- as well as at least one downstream second reflecting means (7), said means (7) being disposed, for reflecting the light bundles in the opposite direction, such that the light bundles pass a second time through the electro-optic means (6) and are subsequently reunited by the first reflecting means (4) and the beam splitter (1) and are conducted to at least one exit point (16), from where the controlled light can be removed,
**characterized in that**
- the electro-optic means (6) consists of two or more series-connected, electrically controllable liquid-crystal cells, said liquid-crystal cells being embedded between electrodes (9', 9", 12', 12") and changing the polarization of passing light bundles (2, 3) depending on the control voltage applied to the electrodes (9', 9", 12', 12").

2. Arrangement according to claim 1, **characterized in that** the - as viewed from the beam splitter (1) - last electrode (12") of the liquid-crystal cells (6) is reflecting and forms the second reflecting means (7).

3. Arrangement according to any one of the preceding claims, **characterized in that** the liquid-crystal cells (6, 9, 12) are formed by nematic liquid crystals with positive dielectric anisotropy whose thickness d satisfies one of the conditions δn·d = lambda/4+N·lambda, δn·d = 3/8·lambda+N·lambda, δn·d = lambda/2+N·lambda, where N is an integer, δn is the double refraction of the liquid crystal and lambda is the wavelength of the light.

4. Arrangement according to any one of claims 1 or 2, **characterized in that** the liquid-crystal cells are formed by ferroelectric liquid crystals (6, 9, 12), said liquid crystals being embedded between electrodes (9', 9", 12', 12") and changing the polarization of passing light bundles (2, 3) depending on the control voltage applied to the electrodes (9', 9", 12', 12").

5. Arrangement according to claim 4, **characterized in that** the - as viewed from the beam splitter (1) - last electrode (12") of the liquid-crystal cells (6) is reflecting and forms the second reflecting means (7).

6. Arrangement according to any one of claims 4 or 5, **characterized in that** the thickness d of the ferroelectric liquid crystals of the liquid-crystal cells (6, 9, 12) satisfies one of the conditions δn·d = lambda/4+N·lambda, δn·d = 3/8·lambda+N·lambda, δn·d = lambda/2+N·lambda, where N is an integer, δn is the double refraction of the liquid crystals and lambda is the wavelength of the light.

7. Arrangement according to any one of the preceding claims, **characterized in that** disposed in the path of the parallel-running polarized light bundles (2, 3) is a phase-retardation plate (10) with an optically effective thickness of a quarter of the wavelength of the light or, in the case of broadband light, of the centroid wavelength.

8. Arrangement according to any one of the preceding claims, **characterized in that** the first reflecting means (4) consists of two mirrors and is of such design that the polarized light bundles (2, 3) run perpendicularly with respect to the plane spanned through the axes of the supplied and of the controlled light.

9. Arrangement according to any one of claims 1 to 7, **characterized in that** the first reflecting means (4) consists of two 90° prisms and is of such design that the polarized light bundles (2, 3) run perpendicularly with respect to the plane spanned through the axes of the supplied and of the controlled light.

10. Arrangement according to any one of claims 1 to 7, **characterized in that** the first reflecting means (4) consists of two pentaprisms and is of such design that the polarized light bundles (2, 3) run perpendicularly with respect to the plane spanned through the axes of the supplied and of the controlled light.

## Revendications

1. Montage pour la commande électrique de l'intensité d'une lumière non-polarisée avec
- un équipement électro-optique (6);
- un séparateur de faisceau (1) pour diviser la lumière amenée en deux faisceaux lumineux orthogonalement polarisés (2, 3);
- un premier équipement réflecteur en aval (4) pour la réflexion d'au moins un des faisceaux lumineux polarisés qui est conçu de façon que les faisceaux polarisés (2, 3) se propagent parallèlement et parcourent l'équipement électro-optique (6);
- ainsi qu'au moins un second équipement réflecteur en aval (7) qui, à des effets de réflexion des faisceaux lumineux dans le sens opposé, est conçu de façon que les faisceaux polarisés parcourent l'équipement électro-optique (6) encore une fois avant d'être réunis par le premier équipement réflecteur (4) et le séparateur de faisceau et acheminés à au moins un point de sortie (16) où la lumière commandée peut être prélevée,
**caractérisé en ce que**
- l'équipement électro-optique (6) comporte deux ou davantage de cellules à cristaux liquides connectées en série et électriquement commandables qui sont insérées entre des électrodes (9', 9", 12', 12") et qui modifient la polarisation des faisceaux de passage (2, 3) en fonction de la tension de commande appliquée aux électrodes (9', 9", 12', 12").

2. Montage selon la revendication 1, **caractérisé en ce que** la dernière électrode (12"), comptée à partir du séparateur de faisceau (1), des cellules à cristaux liquides (6) est réflectrice en formant le second équipement réflecteur (7).

3. Montage selon l'une des revendications précédentes, **caractérisé en ce que** les cellules à cristaux liquides (6, 9, 12) se composent de cristaux liquides nématiques avec anisotropie diélectrique positive dont l'épaisseur d remplit l'une des conditions δn · d = lambda/4+N · lambda, δn · d = 3/8 · lambda+N · lambda, δn · d = lambda/2+N · lambda, N étant un nombre entier, δn la biréfringence du cristal liquide et *lambda* la longueur d'onde de la lumière.

4. Montage selon l'une des revendications 1 ou 2, **caractérisé en ce que** les cellules à cristaux liquides se composent de cristaux liquides ferroélectriques (6, 9, 12) insérés entre des électrodes (9', 9", 12', 12") qui modifient la polarisation des faisceaux lumineux (2, 3) en fonction de la tension de commande appliquée aux électrodes (9', 9", 12', 12").

5. Montage selon la revendication 4, **caractérisé en ce que**, la dernière électrode (12"), comptée à partir du séparateur de faisceau (1), des cellules à cristaux liquides (6) est réflectrice en formant le second équipement réflecteur (7).

6. Montage selon l'une des revendications 4 ou 5, **caractérisé en ce que** l'épaisseur d des cristaux liquides ferroélectriques des cellules à cristaux liquides (6, 9, 12) remplit l'une des conditions δn · d = lambda/4+N · lambda, δn · d = 3/8 · lambda+N · lambda, δn · d = lambda/2+N · lambda, N étant un nombre entier, δn la biréfringence des cristaux liquides et *lambda* la longueur d'onde de la lumière.

7. Montage selon l'une des revendications précédentes, **caractérisé en ce que**, sur le parcours des faisceaux lumineux polarisés parallèles (2, 3), une plaque de retard de phase (10) avec une épaisseur optiquement efficace d'un quart de la longueur d'onde de la lumière ou, en cas de lumière à large bande, de la centroïde spectrale.

8. Montage selon l'une des revendications précédentes, **caractérisé en ce que** le premier équipement réflecteur (4) se compose de deux miroirs et est configuré de sorte que les faisceaux lumineux polarisés (2, 3) soient perpendiculaires au plan déployé par les axes de la lumière amenée et de la lumière commandée.

9. Montage selon l'une des revendications 1 à 7, **caractérisé en ce que** le premier équipement réflecteur (4) se compose de deux prismes à 90° et est configuré de sorte que les faisceaux lumineux polarisés (2, 3) soient perpendiculaires au plan déployé par les axes de la lumière amenée et de la lumière commandée.

10. Montage selon l'une des revendications 1 à 7, **caractérisé en ce que** le premier équipement réflecteur (4) se compose de deux prismes pentagonaux et est configuré de sorte que les faisceaux lumineux polarisés (2, 3) soient perpendiculaires au plan déployé par les axes de la lumière amenée et de la lumière commandée.
